# EUROPEAN PATENT APPLICATION

(11) **EP 4 723 426 A1**
(43) Date of publication of application: **08.04.2026**
(21) Application number: 24814611.0
(22) Date of filing: 31.05.2024
(51) Int. Cl.: H02J 7/36

(54) **POWER SUPPLY SYSTEM, POWER SUPPLY CONTROL APPARATUS AND CONVERSION APPARATUS**

(30) Priority: 01.06.2023 CN 202321382288 U
(71) Applicant: Positec Technology (China) Co., Ltd., Industrial Park Suzhou Jiangsu 215123 (CN)
(72) Inventor: LIN, Wei, Suzhou, Jiangsu 215123 (CN); WU, Hongbing, Suzhou, Jiangsu 215123 (CN); LIN, Guiqing, Suzhou, Jiangsu 215123 (CN); QIAN, Yaoqiu, Suzhou, Jiangsu 215123 (CN); JIAO, Shiping, Suzhou, Jiangsu 215123 (CN); MU, Guoliang, Suzhou, Jiangsu 215123 (CN); LV, Shaofeng, Suzhou, Jiangsu 215123 (CN)
(74) Representative: Kilburn & Strode LLP
(86) International application number: PCT/CN2024/096774
(87) International publication number: WO 2024/245417

(57) **Abstract**

A power supply control device, a convertor and a power supply system are provided. The power supply system includes a convertor and a power supply control device, wherein the power supply control device includes a first power supply interface configured to connect to a mains power interface to obtain electric power, and a second power supply interface configured to supply power to a power tool battery pack; the convertor includes a first conversion interface and a second conversion interface, the first conversion interface is connected to an electric vehicle or an electric vehicle charging pile, the second conversion interface is connected to the first power supply interface, so that the power supply control device connects to the convertor to connect to the electric vehicle or the electric vehicle charging pile to obtain electric power, the convertor can also communicate with the power supply control device and the electric vehicle or the electric vehicle charging pile to achieve power matching of the power supply system based on the communication. The power supply solution of the embodiments of the disclosure can solve the power supply problem of the power tool system to a certain extent and expand the application scenarios of power tools.

## Description

The present application claims priority of the Chinese patent application filed on June 1, 2023, with application number 202321382288.4, the entire contents of which are incorporated herein by reference.

### TECHNICAL FIELD

The disclosure relates to the field of power tool technology, and specifically relates to a power supply system, a power supply control device and a convertor.

### BACKGROUND

In some working scenarios, such as outdoor working scenarios, power tools are often required to work continuously for a long time. To achieve continuous operation of power tools, the selection of a power source is a primary consideration.

Generally speaking, power tools using fuel as a power source (hereinafter referred to as fuel-powered tools, such as gasoline-powered tools) can meet the requirements of long-term continuous operation. However, the main problem with fuel-powered tools is that the exhaust gas they emit pollutes the environment, and fuel-powered tools generate relatively loud noise during operation, causing noise pollution to the surrounding environment.

Power tools have the advantages of being environmentally friendly and clean, and compared with fuel-powered tools, power tools also generate relatively less noise. Therefore, power tools are increasingly favored by power tool users. However, the main problem with power tools is that the battery pack can provide relatively short endurance. This problem becomes particularly prominent in outdoor scenarios or scenarios without mains power outlets.

Therefore, in the field of power tools, especially in the field of commercial power tools with relatively high rated power requirements, although fuel-powered tools have obvious defects, they are still the first choice of power tool users.

### Summary

In view of this, the disclosure provides a power supply control device and a working system, which can solve a power supply problem of a power tool system to a certain extent and expand application scenarios of power tools.

In a first aspect, a power supply control device is provided, comprising: a first power supply interface, a second power supply interface, a power supply control module, and a first power conversion module; the first power supply interface, wherein the first power supply interface is configured to electrically connect to a charging and discharging interface of an electric vehicle to obtain electric power of the electric vehicle; the second power supply interface, wherein the second power supply interface is electrically connected to the first power supply interface, and the second power supply interface is further configured to electrically connect to a power tool battery pack to supply the electric power of the electric vehicle obtained by the first power supply interface to the power tool battery pack; the power supply control module, wherein the power supply control module is electrically connected to the first power supply interface and the second power supply interface, and controls a path between the first power supply interface and the second power supply interface to be in a conductive state or a disconnected state; the first power conversion module, wherein an input end of the first power conversion module is electrically connected to the first power supply interface, and an output end of the first power conversion module is electrically connected to the second power supply interface, a control end of the first power conversion module is connected to the power supply control module, when the power supply control module controls the path between the first power supply interface and the second power supply interface to be in the conductive state, the first power conversion module converts output power of the electric vehicle into input power required for charging the power tool battery pack.

In the embodiments of the disclosure, the power supply control device can obtain the electric power of the electric vehicle through the first power supply interface, and supply the obtained electric power to the power tool battery pack through the second power supply interface, so as to supply power to the power tool. This avoids a situation where the electric power supply of the power tool is insufficient because a user of the power tool cannot find a suitable power supply source to supply power to the power tool. By providing the first power conversion module, the output power of the electric vehicle can be converted into the input power required for charging the power tool battery pack, avoiding a situation where the output power of the electric vehicle does not match input power of the power tool battery pack, so that the output power of the electric vehicle and the input power of the power tool battery pack can be designed separately without considering whether the output power and the input power are compatible.

In a possible implementation, when the first power supply interface is electrically connected to the charging and discharging interface of the electric vehicle, the power supply control module communicates with the electric vehicle through the first power supply interface to obtain remaining energy of the electric vehicle, and in response to the remaining energy being lower than a preset battery level, controls the path between the first power supply interface and the second power supply interface to be in the disconnected state.

In the embodiments of the disclosure, the power supply control module can obtain the remaining energy of the electric vehicle, and control the path between the first power supply interface and the second power supply interface to be in the conductive state or the disconnected state based on the remaining energy of the electric vehicle, so as to improve rationality of switching the power supply control device between two modes.

In a possible implementation, the power supply control device further comprises: an energy storage module, wherein an input end of the energy storage module is electrically connected to the first power supply interface, and an output end of the energy storage module is electrically connected to the second power supply interface to store the electric power of the electric vehicle, and supply the stored electric power to the power tool battery pack.

In the embodiments of the disclosure, the energy storage module can be provided in the power supply control device to store the electric power input by the electric vehicle through the first power supply interface, and supply the stored electric power to the power tool battery pack. This avoids a situation where the battery pack of a first power tool may be in a fully charged state, or the power tool battery pack is supplying power to the power tool when the electric vehicle can charge the power tool battery pack, which is conducive to improving flexibility of power supply.

In a possible implementation, the power supply control device further comprises a second power conversion module, wherein an input end of the second power conversion module is electrically connected to the output end of the energy storage module, and an output end of the second power conversion module is electrically connected to the second power supply interface to convert output power of the energy storage module into input power required for charging the power tool battery pack.

In the embodiments of the disclosure, the second power conversion module can be provided in the power supply control device to convert the output power of the energy storage module into input power required for supplying power to the power tool battery pack, avoiding a situation where the output power of the energy storage module does not match the input power of the power tool battery pack, so that the output power of the energy storage module and the input power of the power tool battery pack can be designed separately without considering whether the output power and the input power are compatible.

In a possible implementation, the second power supply interface comprises a plurality of the second power supply interfaces, wherein the plurality of the second power supply interfaces are configured to electrically connect to a plurality of power tool battery packs.

In a possible implementation, the plurality of the second power supply interfaces are configured to supply power to the plurality of power tool battery packs in a manner of simultaneous power supply or time-division power supply.

In the embodiments of the disclosure, the power supply control device can comprise the plurality of the second power supply interfaces to improve flexibility of supplying power to the power tool battery packs.

In a possible implementation, part or all of output ends of the plurality of the second power supply interfaces supply power to the plurality of power tool battery packs in a manner of wireless power supply, and/or, part or all of output ends of the plurality of the second power supply interfaces supply power to the plurality of power tool battery packs in a manner of wired power supply.

In the embodiments of the disclosure, the plurality of the second power supply interfaces can supply power to the plurality of power tool battery packs in the manner of wireless power supply and/or the manner of wired power supply to improve flexibility of supplying power to the power tool battery packs.

In a possible implementation, the plurality of the second power supply interfaces comprise an AC power supply interface and/or a DC power supply interface.

In the embodiments of the disclosure, the plurality of the second power supply interfaces can comprise the AC power supply interface, that is, can provide AC output externally, which is conducive to meeting various application requirements, being green and environmentally friendly, and conforming to a development concept of new energy.

In a possible implementation, the power supply control device comprises an IoT module, wherein the IoT module is configured to communicate with an external wireless communication device to respond to control of the external wireless communication device.

In the embodiments of the disclosure, the IoT module can be provided in the power supply control device, so that the power supply control device communicates with the external wireless communication device to respond to the control of the external wireless communication device, which is convenient for the user to communicate with the power supply control device through a wireless device at any time, and is conducive to improving user experience.

In a possible implementation, the power supply control device comprises a protection module, wherein the protection module is configured to: control a power supply path between the electric vehicle and the power tool battery pack to be in a disconnected state in response to abnormal operation of the electric vehicle and/or abnormal operation of the power tool battery pack.

In the embodiments of the disclosure, the protection module can be provided in the power supply control device, so as to control the power supply path between the electric vehicle and the power tool battery pack to be in the disconnected state in a case of the abnormal operation of the electric vehicle and/or the abnormal operation of the power tool battery pack, which is conducive to improving safety of a charging path between the electric vehicle and the power tool battery pack.

In a possible implementation, the power supply control device comprises a first wire harness, wherein a first end of the first wire harness is configured to detachably connect to the first power supply interface, and a second end of the first wire harness is configured to detachably connect to the charging and discharging interface of the electric vehicle; wherein the second end of the first wire harness is a standard charging gun interface; the power supply control device further comprises a second wire harness, wherein a first end of the second wire harness is configured to detachably connect to the second power supply interface, and a second end of the second wire harness is configured to detachably connect to the power tool battery pack.

In the embodiments of the disclosure, this is conducive to reducing a volume of the power supply control device and facilitating storage. The first end of the first wire harness is the standard charging gun interface, which is conducive to improving compatibility between the first wire harness and the electric vehicle. The second power supply interface is detachably connected to the second wire harness, which is conducive to reducing the volume of the power supply control device and facilitating storage.

In a possible implementation, the power supply control device further comprises a power supply communication module, wherein the power supply communication module is configured to exchange information with a communication unit of the electric vehicle or an electric vehicle charging pile through a first power supply communication protocol, to at least transmit an output parameter of the electric vehicle or the electric vehicle charging pile and a power demand parameter of the power supply control device.

In a possible implementation, the power supply control module sends a power supply request to the electric vehicle or the electric vehicle charging pile with the power demand parameter of the power supply device when the power supply control module determines that the power demand parameter of the power supply control device is not greater than a rated output parameter of the electric vehicle or the electric vehicle charging pile; and a conversion control module sends a power supply request to the electric vehicle or the electric vehicle charging pile with the rated output parameter of the electric vehicle or the electric vehicle charging pile when the conversion control module determines that the power demand parameter of the power supply control device is greater than the rated output parameter of the electric vehicle or the electric vehicle charging pile.

In the embodiments of the disclosure, the power supply communication module can be provided in the power supply control device to establish communication with the electric vehicle or the electric vehicle charging pile to transmit information, and perform parameter matching based on information of two parties, improving working safety of the power supply control device.

In a possible implementation, the power supply communication module is a wireless communication module or a power line carrier module.

In the embodiments of the disclosure, the power supply communication module is the wireless communication module or the power line carrier module, and the user can use various methods to conveniently realize communication between the power supply control device and the electric vehicle or the electric vehicle charging pile, improving convenience of use for the user.

In a possible implementation, a third power conversion module is disposed between the first power supply interface and the input end of the energy storage module; the input end of the energy storage module and the first power supply interface are both bidirectional interfaces, the third power conversion module is a bidirectional conversion module, when the energy storage module is electrically connected to the electric vehicle or the electric vehicle charging pile through the first power supply interface, the energy storage module can also supply power output of the energy storage module to the electric vehicle or the electric vehicle charging pile after conversion through the third power conversion module.

In the embodiments of the disclosure, the power supply control device further comprises an interface supporting bidirectional transmission and the third power conversion module, so as to output electric power stored in an energy storage power source from the first power supply interface through a reverse conversion manner, for the electric vehicle or the electric vehicle charging pile/a power grid to realize emergency supply, effectively broadening application scenarios of a power conversion module.

In a possible implementation, the second power supply interface of the power supply control device can also be configured to connect to expansion charging equipment, and the first power conversion module can also be configured to convert the output power of the electric vehicle into input power required for charging the expansion charging equipment.

In the embodiments of the disclosure, the power supply control device can be connected to the expansion charging equipment through the second power supply interface to continuously charge a considerable number of power tool battery packs, thereby avoiding trouble of repeated plugging and unplugging operations by the user due to insufficient power supply interfaces, and improving the convenience of use for the user.

The disclosure further provides a power supply system, comprising a power supply control device and a convertor; the power supply control device comprises: a first power supply interface, detachably connected to a mains power interface to obtain electric power; a second power supply interface, detachably connected to a power tool battery pack, to supply the electric power obtained by the first power supply interface to the power tool battery pack; the convertor comprises: a first conversion interface, detachably connected to a charging and discharging interface of an electric vehicle or an electric vehicle charging pile to obtain electric power; a second conversion interface, connected to the first conversion interface to output the electric power of the electric vehicle or the electric vehicle charging pile from the second conversion interface; and the second conversion interface is same as the mains power interface, for the first power supply interface to detachably connect to, so that the power supply control device obtains the electric power from the electric vehicle or the electric vehicle charging pile by the first power supply interface.

In the embodiments of the disclosure, in the power supply system, the convertor connects the electric vehicle or the electric vehicle charging pile and the power supply control device to realize power supply to the power supply control device through the electric vehicle or the electric vehicle charging pile, so as to charge the power tool battery pack, so that the power supply control device can directly access mains power and can also access the electric vehicle or the electric vehicle charging pile through the convertor, broadening power supply sources and usage scenarios of the power supply system, providing diverse choices for the user, and improving the convenience of use.

In a possible implementation, the convertor further comprises a convertor main body, a conversion input wire harness and a conversion output wire harness; the conversion input wire harness comprises a first end and a second end, the first power supply interface is disposed at the first end, and the second end is detachably connected to the convertor main body; and the conversion output wire harness comprises a first end and a second end, the second power supply interface is disposed at the first end, and the second end is detachably connected to the convertor main body.

In the embodiments of the disclosure, the convertor can achieve structural matching and can also adopt detachable input and output wire harnesses, facilitating storage for the user.

In a possible implementation, the convertor comprises a conversion communication module; the conversion communication module sends a request instruction representing external power discharge to the electric vehicle or the electric vehicle charging pile following a first power supply communication protocol, so that the convertor obtains input electric power; wherein the first power supply communication protocol is a matching communication protocol of the electric vehicle or the electric vehicle charging pile.

In the embodiments of the disclosure, the conversion communication module is provided in the convertor to communicate with the electric vehicle or the electric vehicle charging pile using the communication protocol matching the electric vehicle or the electric vehicle charging pile, and send the power supply request to obtain long-term power supply. This provides another effective and sustainable power supply method for the user.

In a possible implementation, the convertor further comprises a conversion control module and the conversion communication module, and the power supply control device comprises the power supply communication module; the conversion control module controls the conversion communication module to establish communication with the power supply communication module to obtain a power demand parameter required for charging of the power supply control device; the conversion control module controls the conversion communication module to establish communication with the electric vehicle or the electric vehicle charging pile to obtain an output parameter of the electric vehicle or the electric vehicle charging pile; the conversion control module determines a matching output parameter for providing to the power supply control device according to the power demand parameter of the power supply control device and the output parameter of the electric vehicle or the electric vehicle charging pile, and controls the conversion communication module to send the matching output parameter to the electric vehicle or the electric vehicle charging pile.

In a possible implementation, when the conversion communication module fails to communicate with the power supply communication module and cannot obtain the power demand parameter of the power supply control device, the conversion control module treats the preset demand parameter as the power demand parameter of the power supply control device.

In a possible implementation, the conversion control module determines the power demand parameter of the power supply device as the matching output parameter when the conversion control module determines that the power demand parameter of the power supply control device is not greater than a rated output parameter of the electric vehicle or the electric vehicle charging pile; and the conversion control module determines the rated output parameter of the electric vehicle or the electric vehicle charging pile as the matching output parameter when the conversion control module determines that the power demand parameter of the power supply control device is greater than the rated output parameter of the electric vehicle or the electric vehicle charging pile.

In the embodiments of the disclosure, the conversion communication module of the convertor is configured to obtain the output parameter from the electric vehicle or the electric vehicle charging pile and the power demand parameter from the power supply control device through communication, and perform parameter matching based on a standard of safe operation, so that a whole working system can obtain optimal power supply efficiency and ensure working safety.

In a possible implementation, the conversion communication module and the power supply communication module communicate following a second power supply communication protocol; and the first power supply communication protocol is different from the second power supply communication protocol.

In the embodiments of the disclosure, in order to match communication with the electric vehicle or the electric vehicle charging pile and communication with the power supply control device, the conversion communication module adopts different power supply communication protocols respectively to perform communication conversion, so as to realize information intercommunication, break through communication barriers between different types of power supply equipment, and effectively utilize available electric power of the electric vehicle or the electric vehicle charging pile.

In a possible implementation, the power supply control device further comprises: a first power conversion module, wherein an input end of the first power conversion module is electrically connected to the first power supply interface, and an output end of the first power conversion module is electrically connected to the second power supply interface; a power supply control module, which is configured to obtain an input power parameter of the first power supply interface, and controlling the first power conversion module to convert the input power parameter into input parameter required for charging the power tool battery pack according to the input power parameter and the power demand parameter of the power supply control device.

In the embodiments of the disclosure, after obtaining matched power demand parameter, the power supply control device further needs to perform conversion according to the input parameter and actual demand of the power tool battery pack, and control the first power conversion module to realize parameter conversion, so as to complete charging of each power tool battery pack to be charged and/or internal energy storage voltage in an efficient and reasonable manner, effectively improving charging efficiency and fully utilizing the supplied electric power.

In a possible implementation, the power supply communication module and the conversion communication module are both wireless communication modules or power line carrier modules.

In a possible implementation, output power of the power supply control device is greater than or equal to 10W and less than or equal to 22KW.

In the embodiments of the disclosure, setting the output power of the power supply control device to be greater than or equal to 10W and less than or equal to 22KW can match charging demand of the power supply control device, and can also maximize utilization of output parameter provided by the electric vehicle or the electric vehicle charging pile.

In a possible implementation, the convertor further comprises the conversion control module; the conversion communication module obtains the remaining energy of the electric vehicle and sends the remaining energy to the conversion control module; the conversion control module controls a path between the first conversion interface and the second conversion interface to be in a disconnected state in response to the remaining energy being lower than the preset battery level.

In the embodiments of the disclosure, over-discharge protection can also be performed on the electric vehicle through the convertor, so as to avoid unnecessary damage to a battery of the electric vehicle or trouble for the user's travel.

In a possible implementation, the power supply control device further comprises: the energy storage module; and the second power conversion module, wherein the input end of the second power conversion module is electrically connected to the output end of the energy storage module, and the output end of the second power conversion module is electrically connected to the second power supply interface to convert the output power of the energy storage module into the input power required for charging the power tool battery pack.

In a possible implementation, the power supply control device further comprises: the energy storage module; and the third power conversion module, wherein an input end of the third power conversion module is electrically connected to the first power supply interface, and an output end of the third power conversion module is electrically connected to the input end of the energy storage module to convert input of the power supply control device into electric power of the energy storage module.

In a possible implementation, the power supply control device comprises the power supply control module, wherein the power supply control module is configured to: select at least one of the energy storage module and the power tool battery pack for charging according to remaining energy of the energy storage module and remaining energy of the power tool battery pack; and/or, the power supply control module is further configured to select at least one of the energy storage module and electric power input from the first power supply interface as a power supply source for charging the power tool battery pack according to the remaining energy of the energy storage module.

In the embodiments of the disclosure, the energy storage module is provided in the power supply control device, charged through the third power conversion module, and charges the power tool battery pack through the second power conversion module, so that the power supply control device itself has a certain charging capability, alleviating the user's power anxiety. At the same time, different charging and discharging priorities can be selected to meet diverse charging needs of the user.

In a possible implementation, the input end of the energy storage module and the first power supply interface are both bidirectional interfaces, the third power conversion module is a bidirectional conversion module, when the energy storage module is electrically connected to the electric vehicle or the electric vehicle charging pile through the first power supply interface, the energy storage module can also supply power output of the energy storage module to the electric vehicle or the electric vehicle charging pile after conversion through the third power conversion module.

In the embodiments of the disclosure, the power supply control device further comprises the interface supporting bidirectional transmission and the third power conversion module, so as to output the electric power stored in the energy storage power source from the first power supply interface through the reverse conversion manner, for the electric vehicle or the electric vehicle charging pile/the power grid to realize emergency supply, effectively broadening the application scenarios of the power conversion module.

In the embodiments of the disclosure, the convertor further comprises a power supply circuit, wherein the power supply circuit is connected to an auxiliary power source to provide auxiliary electric power to the conversion control module of the convertor.

In a possible implementation, the auxiliary power source is disposed inside the convertor.

In a possible implementation, the convertor is provided with an auxiliary power source interface, connected to the power supply circuit, for the power tool battery pack to detachably connect to.

In the embodiments of the disclosure, the convertor can be provided with the auxiliary power source to realize power supply to the conversion control module of the convertor. The auxiliary power source can be built-in or external. An external power source can be selected as the power tool battery pack, so that the user can use existing products to realize power supply, reducing a usage cost for the user.

In a possible implementation, output power of the convertor is greater than or equal to 10W and less than or equal to 22KW.

In the embodiments of the disclosure, setting the output power of the convertor to be greater than or equal to 10W and less than or equal to 22KW can match the charging demand of the power supply control device, and can also maximize utilization of the output parameter provided by the electric vehicle or the electric vehicle charging pile.

The disclosure further provides a convertor, comprising: a first conversion interface, wherein the first conversion interface electrically connects to a charging and discharging interface of an electric vehicle or an electric vehicle charging pile to obtain electric power; a second conversion interface, wherein the first conversion interface is electrically connected to the second conversion interface to output the electric power of the electric vehicle or the electric vehicle charging pile from the second conversion interface; the second conversion interface is further configured to connect to a first power supply interface of a power supply control device, so that the power supply control device obtains the electric power of the electric vehicle or the electric vehicle charging pile from the first power supply interface; wherein the power supply control device is configured to charge a power tool battery pack.

In a possible implementation, the convertor further comprises the convertor main body, the conversion input wire harness and the conversion output wire harness; the conversion input wire harness comprises the first end and the second end, the first power supply interface is disposed at the first end, and the second end is detachably connected to the convertor main body; the conversion output wire harness comprises the first end and the second end, the second power supply interface is disposed at the first end, and the second end is detachably connected to the convertor main body.

In a possible implementation, the convertor further comprises the conversion control module and the conversion communication module, and the power supply control device comprises the power supply communication module; the conversion control module controls the conversion communication module to establish communication with the power supply communication module to obtain a power demand parameter required for charging of the power supply control device; the conversion control module controls the conversion communication module to establish communication with the electric vehicle or the electric vehicle charging pile to obtain an output parameter of the electric vehicle or the electric vehicle charging pile; the conversion control module determines a matching output parameter for providing to the power supply control device according to the power demand parameter of the power supply control device and the output parameter of the electric vehicle or the electric vehicle charging pile, and controls the conversion communication module to send the matching output parameter to the electric vehicle or the electric vehicle charging pile.

In a possible implementation, when the conversion communication module fails to communicate with the power supply communication module and cannot obtain the power demand parameter of the power supply control device, the conversion control module treats the preset demand parameter as the power demand parameter of the power supply control device.

In a possible implementation, the conversion communication module and the power supply communication module communicate following the second power supply communication protocol; and the first power supply communication protocol is different from the second power supply communication protocol.

In a possible implementation, the conversion control module determines the power demand parameter of the power supply device as the matching output parameter when the conversion control module determines that the power demand parameter of the power supply control device is not greater than a rated output parameter of the electric vehicle or the electric vehicle charging pile; the conversion control module determines the rated output parameter of the electric vehicle or the electric vehicle charging pile as the matching output parameter when the conversion control module determines that the power demand parameter of the power supply control device is greater than the rated output parameter of the electric vehicle or the electric vehicle charging pile.

In a possible implementation, the conversion communication module is the wireless communication module or the power line carrier module.

In a possible implementation, the convertor further comprises the power supply circuit, wherein the power supply circuit is connected to the auxiliary power source to provide the auxiliary electric power to the conversion control module of the convertor.

In a possible implementation, the auxiliary power source is disposed inside the convertor.

In a possible implementation, the convertor is provided with the auxiliary power source interface, connected to the power supply circuit, and for the power tool battery pack to detachably connect to.

In a possible implementation, the output power of the convertor is greater than or equal to 10W and less than or equal to 22KW.

For implementation and effects of the above convertor, reference may be made to descriptions of the convertor in the power supply system.

In the embodiments of the disclosure, the convertor connects the electric vehicle or the electric vehicle charging pile and the power supply control device to realize power supply to the power supply control device through the electric vehicle or the electric vehicle charging pile, so as to charge the power tool battery pack, so that the power supply control device can directly access mains power and can also access the electric vehicle or the electric vehicle charging pile through the convertor, broadening the power supply sources and usage scenarios of the power supply system, providing diverse choices for the user, and improving the convenience of use.

### BRIEF DESCRIPTION OF THE DRAWINGS

FIG. 1 is a schematic diagram of a working system provided by an embodiment of the disclosure.
FIG. 2 is an example diagram of a power tool applicable to an embodiment of the disclosure.
FIG. 3 is a schematic diagram of a power supply control device according to an embodiment of the disclosure.
FIG. 4 is a schematic diagram of a power supply control device according to another embodiment of the disclosure.
FIG. 5 is a schematic diagram of a working system according to an embodiment of the disclosure.
FIG. 6 is a schematic diagram of a working system according to another embodiment of the disclosure.
FIG. 7 is a schematic diagram of a working system according to another embodiment of the disclosure.
FIG. 8 is a schematic diagram of a working system according to another embodiment of the disclosure.
FIG. 9 is a schematic diagram of a working system according to another embodiment of the disclosure.
FIG. 10 is a flowchart of a power supply method according to an embodiment of the disclosure.
FIG. 11 is a schematic diagram of a power supply system according to another embodiment of the disclosure.
FIG. 12 is a schematic diagram of a convertor according to another embodiment of the disclosure.
FIG. 13 is a schematic diagram of a convertor according to another embodiment of the disclosure.
FIG. 14 is a schematic diagram of a power supply control device according to another embodiment of the disclosure.
FIG. 15 is a flowchart of a power supply matching method according to an embodiment of the disclosure.

### DETAILED DESCRIPTION

The technical solutions in the embodiments of the disclosure will be clearly and completely described below with reference to the drawings in the embodiments of the disclosure. Obviously, the described embodiments are only part of the embodiments of the disclosure, not all embodiments.

According to different power sources, power tools can be divided into power tools and fuel-powered tools. The advantage of fuel-powered tools is that they can work continuously for a long time with relatively high power, while the disadvantage is that they pollute the environment, and fuel-powered tools generate relatively loud noise during operation, causing noise pollution to the surrounding environment. Therefore, people have been looking for alternatives to fuel-powered tools.

Electricity is an environmentally friendly and clean energy source. Therefore, power tools are increasingly favored by people. However, current power tools, especially high-power power tools with rated power (or operating power) above 1 KW, mainly have the problem of insufficient power supply and cannot support continuous operation of power tools for a long time. Taking power tools with rated power from 1 KW to 3 KW as an example, current battery packs can only support continuous operation of such power tools for a few minutes at most. Once the battery pack is depleted, charging the battery pack often takes several hours. The above problem is usually referred to as the power anxiety problem of power tools.

The following takes garden tools as an example to illustrate this problem in more detail.

Garden tools usually refer to garden landscape maintenance equipment. Garden tools usually take lawns, hedges, flowers, trees or gardens as work objects. There are many types of garden tools, for example, they may include one or more of the following tools: brush cutters, lawn mowers, riding lawn mowers, robotic lawn mowers, hedge trimmers, chainsaws, blowers, shredders, snow blowers, etc.

Garden tools can be divided into household and commercial types. Commercial garden tools are professional power tools designed for garden workers or garden companies. Compared with household garden tools, commercial garden tools have higher requirements for work efficiency. Therefore, the rated power (or maximum working power) of commercial garden tools is usually relatively high.

For commercial garden tools, a common usage scenario is that 2-3 workers form a team and work outside for a day to trim gardens for 10-20 families. For garden trimming work, lawn mowing work usually takes the longest time. Although the lawn size of different families is not consistent, the average time for lawn mowing work is about 20-40 minutes. Therefore, when arriving at each garden, worker A will immediately start mowing the lawn with a lawn mower. While worker A is mowing the lawn, worker B will complete other types of work in sequence, such as worker B will first cut brush, then trim branches, and then blow grass. Worker A and worker B complete all the work almost at the same time. Therefore, a team's working time in one garden is about 20-40 minutes (roughly equivalent to the time required for lawn mowing work). Once one garden is trimmed, the team will go to another garden and repeat the above work process until all work tasks for the day are completed.

Garden maintenance work itself has green and environmentally friendly attributes. Therefore, for garden workers or garden companies, power tools are the ideal choice. However, through the above description, it can be seen that commercial garden tools have very high requirements for the work efficiency of power tools, and users usually hope that the power source of power tools can support continuous work outside for a day. The above requirements are very difficult to meet for current power tools. Furthermore, considering that garden work is usually carried out outdoors, and there are often no mains power outlets outdoors, even when using power tools, it is impossible to recharge power tools in time. For all the above reasons, current commercial garden tools are mainly fuel-powered tools. Although a small number of commercial garden tools also use power tools, such power tools are generally only used as auxiliary work tools.

The above description uses garden work scenarios as an example. In fact, there are many work scenarios that have high requirements for the working duration or work efficiency of power tools, such as work scenarios using cleaning tools to provide cleaning services for various families or companies, or work scenarios using mechanical processing or assembly power tools for parts processing or equipment assembly, etc. To widely use power tools in the above scenarios, the main problem is how to improve the working duration of power tools.

To improve the working duration of power tools, one possible solution is to configure large-capacity battery packs for power tools. However, although battery pack developers have made a lot of research and efforts in terms of capacity and performance of battery packs, the performance of current large-capacity battery packs is still unsatisfactory and still cannot make the working duration of power tools reach a satisfactory level.

When users need to use power tools for long-term work outdoors or in places without mains power outlets, once the battery pack is depleted, the work will be forced to stop because power cannot be replenished in time. Of course, in order to meet the power supply requirements of power tools for a long time, users can purchase many spare battery packs. However, a large number of battery packs are inconvenient to carry on one hand, and will bring huge cost pressure on the other hand. Considering the above two points, it can be seen that this solution is actually not feasible.

It is generally believed that the power anxiety problem of power tools is a natural defect of power tools compared with fuel-powered tools, and unless there is rapid development in battery pack technology, the above problem cannot be solved in the short term.

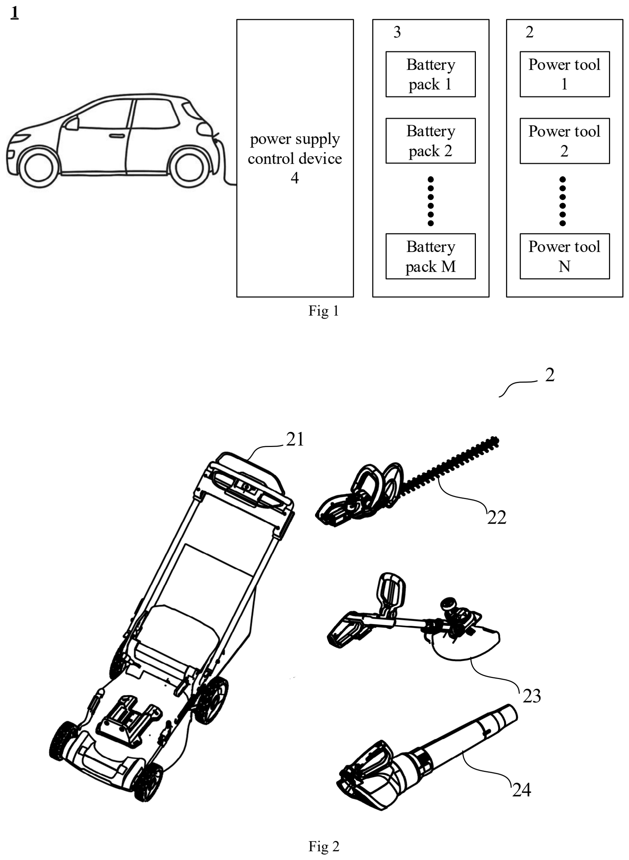

The embodiments of the disclosure provide a different problem-solving approach. The problem-solving approach is to provide a power supply control device so that power tool battery packs can obtain electric power from electric vehicles through the power supply control device. In this way, users of power tools do not need to worry about insufficient power supply due to not being able to find suitable power sources (for example, AC mains power) outdoors. This problem-solving approach helps to truly achieve the comprehensive transformation from fuel-powered tools to power tools. For ease of understanding, the working system applicable to the embodiments of the disclosure is introduced below with reference to Fig. 1.

Figure 1 is a schematic diagram of a working system applicable to the embodiments of the disclosure. The working system 1 shown in Fig. 1 includes a power tool system 2, a battery pack system 3, and a power supply control device 4.

The power tool system 2 may include one or more power tools (Figure 1 shows N power tools, where N is a positive integer not less than 1). For example, if the work content that the power tool system needs to perform is simple and can be completed by one type of power tool, at this time, only one power tool may be configured for the user of the working system 1. For another example, if the work content that the power tool system 2 needs to perform is diverse and requires multiple power tools to cooperate with each other to complete, in this case, multiple power tools may be configured for the user of the working system 1.

Taking garden trimming work as an example, as mentioned earlier, garden trimming work usually includes work content such as lawn mowing, branch trimming, brush cutting, and grass blowing. Fig. 2 shows an example of a power tool system 2 that can be configured for the user of the working system 1 for garden trimming work. The power tool system 2 may include 4 power tools, which are a lawn mower 21, a branch trimmer 22, a brush cutter 23, and a blower 24 (or grass blower).

Referring to Fig. 1 again, the types of power tools in the power tool system 2 may be determined according to the work content of the power tool system 2. Taking garden trimming work as an example, the power tools in the power tool system 2 may be garden power tools (which may sometimes also be called garden power tools or electric garden tools). Garden power tools may include, for example, one or more of the following power tools: brush cutters, lawn mowers, hedge trimmers, chainsaws, blowers, shredders, snow blowers, etc.

Taking cleaning work in homes or office areas as an example, the power tools in the power tool system 2 may be several electric cleaning tools. Such electric cleaning tools may include, for example, vacuum cleaners, floor washers, etc. Alternatively, taking mechanical processing or parts assembly work as an example, the power tool system 2 may include mechanical processing or assembly power tools such as electric hammers, electric drills, etc.

The power tools in the power tool system 2 may be power tools with relatively high rated power requirements. The embodiments of the disclosure refer to such power tools as high-power power tools. In conventional technology, the characteristics of high-power power tools are: after the battery pack of such power tools is depleted, the power replenishment time required is relatively long, but the discharge time (or endurance time) that the battery pack can provide to the power tools is relatively short. In some embodiments, high-power power tools may refer to power tools with rated power (or maximum working power) greater than 1 KW. For example, high-power power tools may refer to power tools with rated power from 1 KW to 3 KW.

Continuing to refer to Fig. 1, in order to meet the power supply requirements of the power tool system 2, a battery pack system 3 is configured in the working system 1. The battery pack system 3 may include one or more battery packs (Figure 1 shows M battery packs, where M is a positive integer greater than 1). The multiple battery packs may be used to alternately supply power to the power tool system 2.

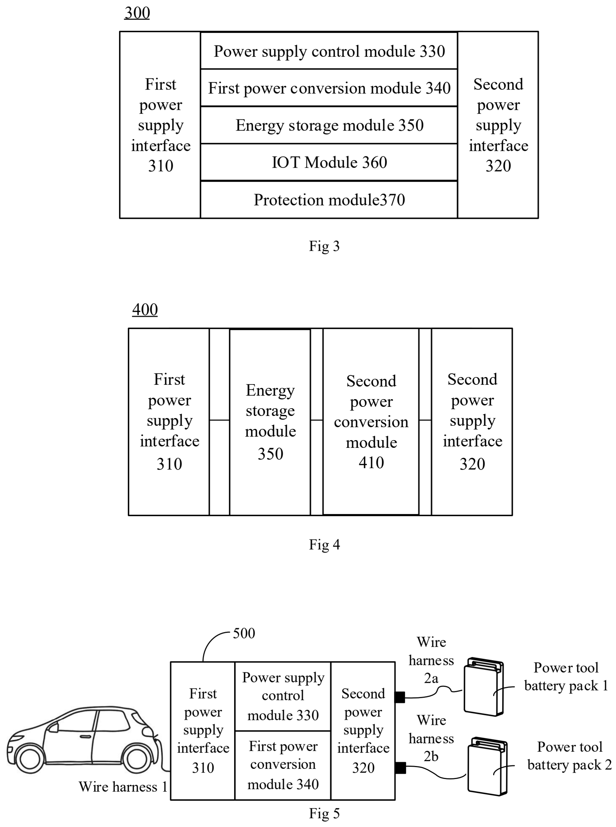

The power supply control device 4 is configured to supply electric power from an electric vehicle to the battery pack system 3. For ease of understanding the power supply control device of the embodiments of the disclosure, the power supply control device of the embodiments of the disclosure is introduced below with reference to Fig. 3. The power supply control device 4 shown in Fig. 3 includes a first power supply interface 310, a second power supply interface 320, a power supply control module 330, and a first power conversion module 340.

The first power supply interface 310 is configured to electrically connect to a charging and discharging interface of an electric vehicle or an electric vehicle charging pile to obtain electric power from the electric vehicle or the electric vehicle charging pile. The charging and discharging interface of the electric vehicle may be an interface for charging the electric vehicle. In some implementations, the above-mentioned charging and discharging interface of the electric vehicle may be an interface through which a charging pile charges the electric vehicle. In some implementations, the electric vehicle may also discharge externally through this interface. In other embodiments, the charging interface and discharging interface of the electric vehicle may be separately configured. In this case, the charging and discharging interface of the electric vehicle connected to the first power supply interface 310 is the discharging interface of the electric vehicle.

The second power supply interface 320 is electrically connected to the first power supply interface 310, and the second power supply interface 320 is configured to electrically connect to a power tool battery pack to supply the electric power from the electric vehicle or the electric vehicle charging pile obtained by the first power supply interface 310 to the power tool battery pack.

The power supply control module 330 (also called "control circuit") is electrically connected to the first power supply interface 310 and the second power supply interface 320, and is configured to control a path between the first power supply interface 310 and the second power supply interface 320 to be in a conductive state or a disconnected state.

An input end of the first power conversion module 340 is connected to the first power supply interface 310, an output end of the first power conversion module 340 is connected to the second power supply interface 320, and a control end of the first power conversion module 340 is connected to the power supply control module 330. When the power supply control module 330 controls the path between the first power supply interface 310 and the second power supply interface 320 to be in the conductive state, the first power conversion module 340 converts output power of the electric vehicle into input power required for charging a first power tool battery pack, so as to charge the battery pack of the first power tool.

In the embodiments of the disclosure, the power supply control device can obtain electric power from an electric vehicle through the first power supply interface, and supply the obtained electric power to a power tool battery pack through the second power supply interface to supply power to the power tool. This avoids the problem of insufficient power supply to the power tool due to the inability of power tool users to find suitable power sources to supply power to the power tool.

On the other hand, using an electric vehicle as an energy source to charge power tool battery packs has the following advantages:
Advantage 1: The electric vehicle itself can serve as both a carrier for transporting power tools and power tool battery packs, and as an energy source for power tool battery packs, which is conducive to diversifying the functions of the electric vehicle.
Advantage 2: The electric vehicle itself can store a large amount of electric power, and the electric power required by power tool battery packs (or the power required by power tools) is much less than the electric power of the electric vehicle, which can meet the charging needs of power tools without affecting the use of the electric vehicle.
Advantage 3: The electric vehicle can be quickly recharged through charging piles, completely solving the charging anxiety and power anxiety problems of power tools, which is conducive to realizing the need to charge power tool battery packs anytime and anywhere.
Advantage 4: Using the electric vehicle as an energy source for charging realizes energy sharing and greatly reduces the cost of charging solutions.

In addition, the above-mentioned first power supply interface 310 may be an AC charging interface or a DC charging interface for receiving AC or DC power output from the electric vehicle or the electric vehicle charging pile, which is not limited in the embodiments of the disclosure.

To meet the charging needs of power tools, the above-mentioned second charging interface 320 may adopt a customized charging interface. In some implementations, the second charging interface 320 may encapsulate one or more of power lines, communication lines, and enable control lines.

The power lines are configured to transmit electric power to the power tool battery pack. The communication lines are configured for communication between the power supply control device and the power tool battery pack, for example, to obtain the energy of the power tool battery pack. For another example, to obtain the working status of the power tool battery pack, etc. The enable control lines are configured to enable or disable the function of supplying power to the power tool battery pack. Of course, in other implementations, the above-mentioned customized charging interface may also encapsulate other functions, or encapsulate wire harnesses corresponding to other functions, which is not limited in the embodiments of the disclosure.

In the embodiments of the disclosure, the second charging interface 320 may supply power to the power tool battery pack in a wireless charging manner. Of course, the second charging interface 320 may also supply power to the power tool battery pack in a wired charging manner. The embodiments of the disclosure do not specifically limit this.

As mentioned above, power tool users usually carry multiple power tool battery packs. Therefore, the second power supply interface may include multiple interfaces, and each of the multiple second power supply interfaces may be electrically connected to one power tool battery pack.

Usually, in order to improve the power supply efficiency of the power supply control device, the power supply control device may simultaneously supply power to multiple power tool battery packs through part or all of the multiple second power supply interfaces. Of course, in other cases, the power supply control device may not supply power to multiple power tool battery packs. Therefore, the power supply control device may also supply power to multiple power tool battery packs in a time-division manner through part or all of the multiple second power supply interfaces.

For ease of understanding, the power supply control device of the embodiments of the disclosure is continued to be introduced below using "power tool battery pack" as an example.

In some implementations, the power supply control module 330 may control the above-mentioned path to be in a disconnected state or a conductive state based on the working condition of the electric vehicle or the electric vehicle charging pile. The working condition of the electric vehicle may be, for example, the remaining energy of the electric vehicle, whether the electric vehicle or the charging pile of the electric vehicle has a fault, etc. In other implementations, the power supply control module 330 may control the above-mentioned path to be in a disconnected state or a conductive state based on the working condition of the power tool battery pack.

Therefore, in some implementations, the above-mentioned power supply control module 330 may have the function of communicating with the electric vehicle or the electric vehicle charging pile to obtain the working condition of the electric vehicle or the electric vehicle charging pile. That is, when the first power supply interface is electrically connected to the charging interface of the electric vehicle, the power supply control module is configured to communicate with the electric vehicle or the electric vehicle charging pile through the first power supply interface. When the above-mentioned working condition of the electric vehicle includes the remaining energy of the electric vehicle, the power supply control module is configured to: obtain the remaining energy of the electric vehicle; and control the electric vehicle to stop supplying power through the first power supply interface in response to the remaining energy being lower than a preset battery level.

It should be noted that controlling the electric vehicle to stop supplying power through the first power supply interface can be understood as controlling the electric vehicle to stop supplying power to the power tool battery pack through the first power supply interface. Of course, in some implementations, an energy storage module may also be provided in the power supply control device. In this case, controlling the electric vehicle to stop supplying power through the first power supply interface can be understood as controlling the electric vehicle to stop supplying power to the energy storage module through the first power supply interface, or controlling the electric vehicle to stop supplying power to the energy storage module and the power tool battery pack through the first power supply interface. The solution in which the power supply control device includes an energy storage module will be introduced below. For brevity, it will not be described in detail here.

In the embodiments of the disclosure, the power supply control device can communicate with the electric vehicle through the power supply control module to obtain the remaining energy of the electric vehicle, and control the electric vehicle to stop supplying power through the first power supply interface based on the remaining energy of the electric vehicle being lower than a preset battery level, so as to avoid supplying all the electric power of the electric vehicle to the first power tool charging pack, resulting in the electric vehicle being unable to drive. Of course, in some cases, if the situation where the electric vehicle needs to continue driving is not considered, all the electric power of the electric vehicle may also be obtained.

In the embodiments of the disclosure, the power supply control device can also communicate with the electric vehicle charging pile through the power supply control module to obtain the working condition of the electric vehicle charging pile, and control the electric vehicle charging pile to stop supplying power through the first power supply interface based on abnormal working condition of the charging pile, so as to avoid unnecessary damage to the charging pile or the power supply control device.

As introduced above, the power supply control module needs to communicate with the electric vehicle or the electric vehicle charging pile. Therefore, in some implementations, the power supply control module can also implement one or more functions among handshaking, communication, information processing, and control between the electric vehicle or the electric vehicle charging pile.

In some embodiments, the power supply control device may include a convertor, and the power supply control device communicates with the electric vehicle or the electric vehicle charging pile through the convertor to obtain the working condition of the electric vehicle or the electric vehicle charging pile.

In some embodiments, the above-mentioned convertor may also be an independent device, that is, one end of the convertor is connected to the electric vehicle or the electric vehicle charging pile, and the other end is connected to the first power supply interface of the power supply control device to transmit the electric power from the electric vehicle or the electric vehicle charging pile to the power supply control device, while establishing communication between the electric vehicle or the electric vehicle charging pile and the working condition control device.

It can be understood that matching communication modules may be provided in the power supply control device and the convertor to achieve communication, and matching communication modules may be provided in the convertor and the electric vehicle or the electric vehicle charging pile to achieve communication, that is, the convertor can realize communication interconnection among the three.

As introduced above, the power supply control module 330 can control the above-mentioned path to be in a disconnected state or a conductive state based on the working condition of the power tool battery pack. Therefore, in some implementations, the power supply control module 330 can also have the function of communicating with the power tool battery pack to obtain the energy of the first electric vehicle battery pack. That is, when the second power supply interface is electrically connected to the power tool battery pack, the power supply control module is configured to communicate with the power tool battery pack through the second power supply interface. When the above-mentioned working condition of the power tool battery pack includes the remaining energy of the power tool battery pack, the power supply control module is configured to: obtain the remaining energy of the power tool battery pack; and control the power supply control device to stop supplying power through the second power supply interface in response to the remaining energy of the power tool battery pack being higher than a preset battery level.

It should be noted that controlling the power supply control device to stop supplying power through the second power supply interface can be understood as controlling the electric vehicle to stop supplying power to the power tool battery pack through the second power supply interface. Of course, in some implementations, an energy storage module may also be provided in the power supply control device. In this case, controlling the power supply control device to stop supplying power through the second power supply interface can be understood as controlling the energy storage module to stop supplying power through the second power supply interface, or controlling the electric vehicle to stop supplying power to the power tool battery pack through the second power supply interface. The solution in which the power supply control device includes an energy storage module will be introduced below. For brevity, it will not be described in detail here.

In some cases, the output power of the electric vehicle or the electric vehicle charging pile does not match the input power of the power tool battery pack. Therefore, a first power conversion module 340 (also called "power conversion circuit") can be provided in the power supply control device to convert the output power of the electric vehicle into the input power required for supplying power to the power tool battery pack based on the communication result between the power supply control device and the electric vehicle or the electric vehicle charging pile. For example, the first power conversion module 340 may be an ACDC (alternating current-direct current) power conversion module that converts AC power input from the electric vehicle through the first power supply interface into DC power suitable for the power tool battery pack. For another example, the first power conversion module 340 may be a DCDC (direct current-direct current) power conversion module that converts DC power input from the electric vehicle through the first power supply interface into DC power supported by the power tool battery pack.

On the other hand, the first power conversion module 340 in the embodiments of the disclosure can be custom-developed, which is conducive to achieving high-power charging of the battery pack, breaking through the power limitation of mains AC power, and improving the efficiency of charging the power tool battery pack.

In some scenarios, when the electric vehicle or the electric vehicle charging pile can charge the power tool battery pack, the battery pack of the first power tool may be in a fully charged state, or the power tool battery pack is supplying power to the power tool. At this time, the electric vehicle or the electric vehicle charging pile cannot charge the power tool battery pack. Therefore, in order to improve the flexibility of power supply, an energy storage module 350 can be provided in the power supply control device to store the electric power input by the electric vehicle or the electric vehicle charging pile through the first power supply interface 310 and supply the stored electric power to the power tool battery pack.

Continuing to refer to Fig. 3, an input end of the energy storage module 350 is electrically connected to the first power supply interface 310, and an output end of the energy storage module 350 is electrically connected to the second power supply interface 320. In one embodiment, when the electric power output by the electric vehicle is direct current, the input power of the energy storage module 350 can be configured to be the same as the output power of the electric vehicle or the electric vehicle charging pile. In this case, the input end of the energy storage module 350 is directly electrically connected to the first power supply interface 310. Of course, the input power of the energy storage module 350 can also be configured to be different from the output power of the electric vehicle or the electric vehicle charging pile. In this case, the energy storage module 350 is connected to the first power supply interface 310 through a third power conversion module, wherein the third power conversion module may be a DCDC conversion module to convert the electric power of the electric vehicle or the electric vehicle charging pile into electric power suitable for charging the energy storage module 350. When the electric power output by the electric vehicle or the electric vehicle charging pile is alternating current, the energy storage module 350 is connected to the first power supply interface 310 through a third power conversion module, wherein the third power conversion module may be an ACDC conversion module.

In some implementations, the above-mentioned energy storage module may include a battery or a battery pack. In other implementations, the above-mentioned energy storage module may also be other modules with energy storage functions, which is not limited in the embodiments of the disclosure.

Of course, if the flexibility of power supply is not considered, or in order to reduce the cost of the power supply control device, the energy storage module 350 may not be provided in the power supply control device. The embodiments of the disclosure do not limit this.

As mentioned above, when the energy storage module 350 is provided in the power supply control device, the output power of the energy storage module 350 may not match the input power of the power tool battery pack. Therefore, a second power conversion module 410 (also called "second power conversion circuit") can be provided in the power supply control device to convert the output power of the energy storage module 350 into the input power required for supplying power to the power tool battery pack.

In some scenarios, when the electric vehicle or the electric vehicle charging pile can provide electric power, there may be multiple charging needs. For example, the energy storage module 350 and/or the battery pack of the first power tool may be in different battery level states with different charging priorities, or the power tool battery pack urgently needs to be fully charged to supply power to the power tool. Therefore, in order to improve the flexibility of power supply, the power supply control module 330 in the power supply control device can select at least one of the energy storage module and the power tool battery pack for charging according to preset priority or user-required priority. In some scenarios, the power supply control module preferably determines charging priority according to the remaining energy of the energy storage module 330 and the remaining energy of the power tool battery pack to select at least one of the energy storage module 350 and the power tool battery pack for charging. In some scenarios, the power tool battery pack has the highest power supply priority to meet the continuous operation of the power tool, so the power supply control module 330 can preferably charge the power tool battery pack with priority.

In some cases, when the electric vehicle or the electric vehicle charging pile can provide electric power, the energy storage module 350 can also serve as a power source. To protect the energy storage module 350, the power supply control module 330 can select at least one of the electric vehicle or the electric vehicle charging pile or the energy storage module 350 as a power source for charging the power tool battery pack according to the remaining energy of the energy storage module 350. In some cases, the electric vehicle or the electric vehicle charging pile is preferably used as the power source to reduce multiple conversions of electric power.

It can be understood that when the remaining energy of the energy storage module 350 is insufficient, it cannot provide sufficiently large charging power and is prone to the risk of over-discharge. Therefore, the electric power from the electric vehicle or the electric vehicle charging pile is preferably selected as the power source. When the remaining energy of the energy storage module 350 is sufficient, while the electric vehicle charging pile can only provide limited power AC electricity, the energy storage module 350 can be selected as the power source to charge the power tool battery pack. In particular, when the remaining energy of the energy storage module 350 is sufficient, the electric vehicle or the electric vehicle charging pile and the energy storage module 350 can also be jointly selected as power sources to charge the power tool battery pack.

Figure 4 shows a schematic diagram of a power supply control device according to another embodiment of the disclosure. It should be understood that modules with the same functions in the power supply control device shown in Fig. 4 and the power supply control device shown in Fig. 3 use the same numbers. For brevity, details will not be repeated below. Referring to Fig. 4, an input end of the second power conversion module 410 is electrically connected to an output end of the energy storage module 350, and an output end of the second power conversion module 410 is electrically connected to the second power supply interface 320 to convert the output power of the energy storage module 350 into the input power required for supplying power to the power tool battery pack.

For example, the second power conversion module 410 may be a DCDC (direct current-direct current) power conversion module. The energy storage module 350 converts AC power or DC power input from the electric vehicle or the electric vehicle charging pile into DC power and stores it, and then converts the DC power in the energy storage module into DC power suitable for the power tool battery pack through the second power conversion module. For another example, the second power conversion module 410 may be a DCAC (direct current-alternating current) power conversion module. The energy storage module converts AC power or DC power input from the electric vehicle into DC power and stores it, and then converts the DC power in the energy storage module into AC power suitable for the power tool battery pack through the second power conversion module.

It should be noted that the above-mentioned second power conversion module 410 and the first power conversion module 340 are the same module. Of course, the above-mentioned second power conversion module 410 and the first power conversion module 340 are independent modules, which is not limited in the embodiments of the disclosure.

To improve user experience and facilitate users to communicate with the power supply control device through wireless devices at any time, an IoT (Internet of Things) module 360 (also called "IoT circuit") can be provided in the power supply control device. The IoT module 360 is configured to communicate with external wireless communication devices to respond to control from the external wireless communication devices.

In some implementations, the above-mentioned IoT module 360 can communicate with wireless devices through a wireless communication network, wherein the wireless communication network may be, for example, Bluetooth, WiFi, RFID (Radio Frequency Identification), or 4G (the 4th generation mobile communication technology), etc. Correspondingly, the wireless devices may be, for example, wireless terminal devices, such as handheld terminals, computers, iPads, etc.

For example, the external wireless communication device may be a handheld terminal that wirelessly communicates with the power supply control device through Bluetooth. The user sets charging and control instructions for the power supply control device on the handheld terminal and sends them to the power supply control device through wireless communication, such as charging power, charging duration, charging sequence, program updates, etc. The power supply control device controls the charging of the power tool battery pack based on the received charging instructions. Of course, the user can also obtain various parameters of the power supply control device through the handheld terminal to timely know the working status of the power supply control device.

To improve the safety of the charging path between the electric vehicle and the power tool battery pack, a protection module 370 (also called "protection circuit") can also be provided in the power supply control device. The protection module is configured to control the power supply path between the electric vehicle and the power tool battery pack to be in a disconnected state in response to abnormal operation of the electric vehicle and/or abnormal operation of the power tool battery pack. Conversely, when the electric vehicle and the power tool battery pack can operate normally, the protection circuit 370 can control the power supply path between the electric vehicle and the power tool battery pack to be in a conductive state.

In some implementations, the above-mentioned protection circuit may include components such as switches and/or fuses. In other implementations, the protection module can perform fault protection on the electric vehicle and the power tool battery pack through the power supply control module and the working status of the electric vehicle and/or the first power tool charging pack. The fault protection may include, for example, one or more of over-temperature protection, over-voltage protection, over-current protection, short-circuit protection, etc.

In some implementations, the power supply control device includes a first wire harness and a second wire harness. A first end of the first wire harness is configured to detachably connect to the first power supply interface, and a second end of the first wire harness is configured to connect to the charging and discharging interface of the electric vehicle. A first end of the second wire harness is configured to detachably connect to the second power supply interface, and a second end of the second wire harness is configured to detachably connect to the power tool battery pack.

In this embodiment, in order to improve the compatibility between the power supply control device and the electric vehicle, the second end of the first wire harness connecting to the electric vehicle can adopt the same charging interface standard as the charging interface of the electric vehicle. In other words, the second end of the first wire harness connecting to the electric vehicle can adopt the electric vehicle charging interface standard. The electric vehicle charging interface standard can be a universal standard complying with various countries and regions, for example, it can be CEE standard charging. In some implementations, the second end of the first wire harness connecting to the electric vehicle can be a charging gun plug. The second end interface of the second wire harness can be the same as the battery pack installation interface of the power tool, for detachably connecting the power tool battery pack. Both the first wire harness and the second wire harness can be detachably connected to the main body of the power supply control device, so that when the power supply control device is not in use, the user can detach the first wire harness and the second wire harness from the main body for storage of the first wire harness and the second wire harness. It should be noted that in this embodiment, the first power supply interface, the second power supply interface, the power supply control module, the first power conversion module, the energy storage module, the second power conversion module, and the protection module are all disposed on the main body.

To further enable the power supply control device to safely and efficiently obtain electric power from the electric vehicle or the electric vehicle charging pile, the power supply control device can be provided with a power supply communication module to perform information exchange between the output parameter of the electric vehicle or the electric vehicle charging pile and the input parameter of the power supply control device, thereby achieving parameter matching between the two.

Different from the first power conversion module 340 mentioned earlier, here it is necessary to solve the problem that the output capability of the electric vehicle or the electric vehicle charging pile does not match the demand of the power supply control device. The first power conversion module 340 is disposed inside the power supply control device and is configured to convert the output power obtained by the power supply control device from the electric vehicle or the electric vehicle charging pile (that is: the output power of the electric vehicle or the electric vehicle charging pile is the input power of the power supply control device) into the input power of the power tool battery pack. The focus here is on how the power supply control device obtains a matching power parameter from the electric vehicle or the electric vehicle charging pile.

In some embodiments, the power supply control device establishes communication with a communication unit of the electric vehicle or the electric vehicle charging pile through the power supply communication module to exchange information. To achieve matching of a power supply parameter, the first communication unit at least obtains the output parameter of the electric vehicle or the electric vehicle charging pile. The output parameter can include a rated output parameter, a real-time output parameter, or output parameter comparison tables based on different temperatures, voltages, currents, etc., which are not specifically limited here.

It can be understood that existing electric vehicles or electric vehicle charging piles have standard power supply communication protocols built in. For external devices to obtain electric power from electric vehicles or electric vehicle charging piles, they must follow consistent power supply communication protocols. Therefore, corresponding power supply communication modules need to be provided in the power supply control device, and consistent power supply communication protocols need to be adopted to establish communication, obtain information from the electric vehicle or electric vehicle charging pile, provide demand input for the power supply control device, realize information exchange and parameter matching, and obtain electric power in a safe, efficient, and reasonable manner.

In some embodiments, in order to achieve matching between the output parameter of the electric vehicle or electric vehicle charging pile and the input parameter of the power supply control device, improve power utilization efficiency and equipment working safety, the output capability of the electric vehicle or electric vehicle charging pile and the power demand parameter of the power supply control device are used as standards for matching. In one feasible embodiment, when the power demand parameter of the power supply control device is not greater than the rated output parameter of the electric vehicle or electric vehicle charging pile, the power supply control device sends a power supply request to the electric vehicle or electric vehicle charging pile with the power demand parameter of the power supply device to obtain corresponding power demand parameter as input from the electric vehicle or electric vehicle charging pile; when the power demand parameter of the power supply control device is greater than the rated output parameter of the electric vehicle or electric vehicle charging pile, the power supply control device sends a power supply request to the electric vehicle or electric vehicle charging pile with the rated output parameter of the electric vehicle or electric vehicle charging pile to obtain the rated output parameter of the electric vehicle or electric vehicle charging pile as input from the electric vehicle or electric vehicle charging pile.

The input parameter of the power supply control device includes at least the real-time input parameter of the power supply control device, the power demand parameter, the minimum input parameter for operation, etc. The power demand parameter usually refers to the input power parameter required by the power supply control device when it needs to charge the energy storage module (if any) and/or the power tool battery pack connected to the second power supply interface.

It can be understood that in some scenarios, the rated output parameter of electric vehicles or electric vehicle charging piles is relatively large and fully capable of meeting the input parameter requirements of various external devices. Therefore, for power supply control devices that charge power tool battery packs, they can safely and efficiently obtain input matching their required input parameter from electric vehicles or electric vehicle charging piles. For example, the rated output power of electric vehicle batteries or charging piles can reach 2.5 KW-22 KW. For electric vehicles or electric vehicle charging piles with rated output power higher than 7.2 KW, their rated output power can fully cover the 3.6 KW input demand or 7.2 KW input demand of power supply control devices. Therefore, however much input power the power supply control device needs, the electric vehicle or electric vehicle charging pile will output at that power level.

In other scenarios, the input parameter required by the power supply control device are very large, for example, when multiple devices to be charged are connected simultaneously, exceeding the rated output parameter of the electric vehicle or electric vehicle charging pile. To ensure the safe operation of the electric vehicle and electric vehicle charging pile, the electric vehicle or electric vehicle charging pile can only provide rated output to the power supply control device at most, that is, the power supply control device needs to correspondingly operate with a reduced parameter. For example, some electric vehicle batteries usually only allow small appliances to operate, so the rated output power allowed for external discharge is relatively small. Some rated output power may only be 2.5 KW, which cannot meet the 3.6 KW input demand or 7.2 KW input demand of some power supply control devices. Therefore, after the power supply communication module learns through communication that the electric vehicle or electric vehicle charging pile outputs its highest rated output power and compares it with the power demand parameter of the power supply control device, it sends a power supply request to the electric vehicle or electric vehicle charging pile with the rated output power of the electric vehicle or electric vehicle charging pile to obtain rated output power output from the electric vehicle or electric vehicle charging pile. Correspondingly, since the rated output power is less than the power demand parameter, the power supply control device will charge the power tool battery pack after reducing the power of the available rated output power.

In some embodiments, the power supply communication module is a wireless communication module. Similar to the IoT module, the wireless communication module usually includes Bluetooth, WiFi, RFID, 4G, etc., and communicates with correspondingly configured matching communication modules in the electric vehicle or electric vehicle charging pile. In another feasible embodiment, the power supply communication module is a power line carrier module. It can be understood that the above-mentioned first wire harness is a wire harness that supports power line carrier. When the power supply control device is connected to the charging and discharging interface of the electric vehicle or electric vehicle charging pile through the first wire harness, the power line carrier module of the power supply control device will communicate with the matching communication module of the electric vehicle or electric vehicle through the first wire harness.

In some embodiments, a third power conversion module is disposed between the first power supply interface and the input end of the energy storage module 350; the input end of the energy storage module 350 is a bidirectional interface, the first power supply interface 310 of the power supply control device is also a bidirectional interface, and the third power conversion module is a bidirectional conversion module. Therefore, when the energy storage module 350 is electrically connected to the electric vehicle or electric vehicle charging pile through the first power supply interface 310, the third power conversion module can convert the electric power stored in the energy storage module 350 and reversely output it to the battery of the electric vehicle, or reversely provide it to the mains power through the electric vehicle charging pile.

In this embodiment, this design can usually cope with some special situations. For example, when the electric power of the electric vehicle is insufficient to drive a preset distance and needs to temporarily supplement a small amount of electric power, or when the electric vehicle cannot start due to over-discharge caused by long-term non-use, the energy storage module 350 in the power supply control device can timely supplement electric power. Of course, when connected to an electric vehicle charging pile, the electric power of the energy storage module 350 can also be timely supplemented back to the grid system to compensate for grid voltage fluctuations, or in special circumstances, the pre-stored electric power can be provided to equipment with higher power consumption priority through the grid, thereby effectively improving the convenience of the power supply control device and expanding application scenarios.

In some embodiments, the second end of the first wire harness of the power supply control device is configured to connect to the charging and discharging interface of the electric vehicle and can optionally be configured as a charging gun plug. However, the charging gun plug cannot be directly connected to mains power. Therefore, to also match application scenarios with mains power interfaces, the power supply control device can also be connected to a mains power interface through the first power supply interface via a convertor. Therefore, the power supply control device can both directly connect to the charging and discharging interface of an electric vehicle or electric vehicle charging pile, and connect to a mains power interface through a convertor, thereby being applicable to various different power supply environments.

It can be understood that one end of the convertor is an interface matching the above-mentioned charging gun, and the other end is a plug matching the mains power interface.

In some embodiments, the second power supply interface 320 of the power supply control device can also be connected to expansion charging equipment. The expansion charging equipment is configured to charge at least two power tool battery packs, thereby providing electric power from the electric vehicle or electric vehicle charging pile to multiple power tool battery packs. In this embodiment, by connecting expansion charging equipment, charging of multiple power tool battery packs can be achieved, avoiding repeated battery pack replacement operations by users, especially during nighttime power replenishment, greatly improving user convenience.

For ease of understanding, the power supply solution based on the power supply control device according to the embodiments of the disclosure is introduced below using the power supply control devices shown in Fig. 5 to 9 as examples. It should be noted that the modules with the same functions in the power supply control devices shown in Fig. 5 to 9 and the power supply control device shown in Fig. 3 use the same numbers.

Referring to Fig. 5, the power supply control device 500 includes a first power supply interface 310, a second power supply interface 320, a power supply control module 330, and a first power conversion module 340, and the second power supply interface 320 includes a second power supply interface 1 and a second power supply interface 2. The first power supply interface 310 can be electrically connected to the charging interface of an electric vehicle through wire harness 1, the second power supply interface 1 can be electrically connected to the charging interface D1 of power tool battery pack 1 through wire harness 2a, and the second power supply interface 2 can be electrically connected to the charging interface D2 of power tool battery pack 2 through wire harness 2b.

Assuming that the electric vehicle itself carries 120 KWH of electric power and is in a fully charged state. The capacity of power tool battery pack 1 and power tool battery pack 2 is 600 WH each, and both battery packs are in an empty state, then the cumulative capacity of the two power tool battery packs is 1200 WH. The power supply solution based on the power supply control device 500 is introduced below in two ways.

In Application 1, if the charging interface of the electric vehicle or electric vehicle charging pile is an AC charging interface with rated output power greater than 6 KW, the power conversion module built into the power supply control device 500 is a 6 KW ACDC power conversion module, which can convert the AC power output from the electric vehicle or electric vehicle charging pile through the charging interface into DC power suitable for the power tool battery pack, and input to power tool battery pack 1 and power tool battery pack 2 through the second power supply interface 1 and the second power supply interface 2 respectively. The second power supply interface 1 and the second power supply interface 2 can provide DC charging power of 3 KW to the two power tool battery packs through wire harness 2a and wire harness 2b. In the scenario where two power tool battery packs are charged simultaneously, it takes about 12 minutes to charge the two power tool battery packs from empty to full state.

In Application 2, if the charging interface of the electric vehicle or electric vehicle charging pile is a DC charging interface with rated output power greater than 6 KW, the power conversion module built into the power supply control device 500 is a 6 KW DCDC power conversion module, which can convert the DC power output by the electric vehicle or electric vehicle charging pile through the charging interface into DC power suitable for the power tool battery pack, and input DC power of 3 KW to the two power tool battery packs through wire harness 2a and wire harness 2b respectively. In this way, in the scenario where two power tool battery packs are charged simultaneously, it takes about 12 minutes to charge the two power tool battery packs from empty to full state.

In the above two applications, the power required for one charge of the two power tool battery packs is about 1.2 KWH, which usually accounts for about 1% of the electric power owned by the electric vehicle. Taking garden power tools as an example, such power tools need to consume about 12 KWH of electric power per day under heavy load conditions, accounting for about 10% of the electric power owned by the electric vehicle. It can be seen that using electric vehicles to charge power tool battery packs has limited impact on electric vehicles and can even be ignored.

Usually, whether the charging interface of the electric vehicle or electric vehicle charging pile is an AC charging interface or a DC charging interface, it can provide high-power output above 6 KW. Through the power supply control device 500, high-power charging above 6 KW can be output to power tool battery packs, achieving rapid charging of power tool battery packs. On one hand, this improves the efficiency of charging power tool battery packs. On the other hand, supplying power to power tool battery packs based on the charging interface of the electric vehicle or electric vehicle charging pile avoids the need to design power supply control devices for different mains power in different countries.

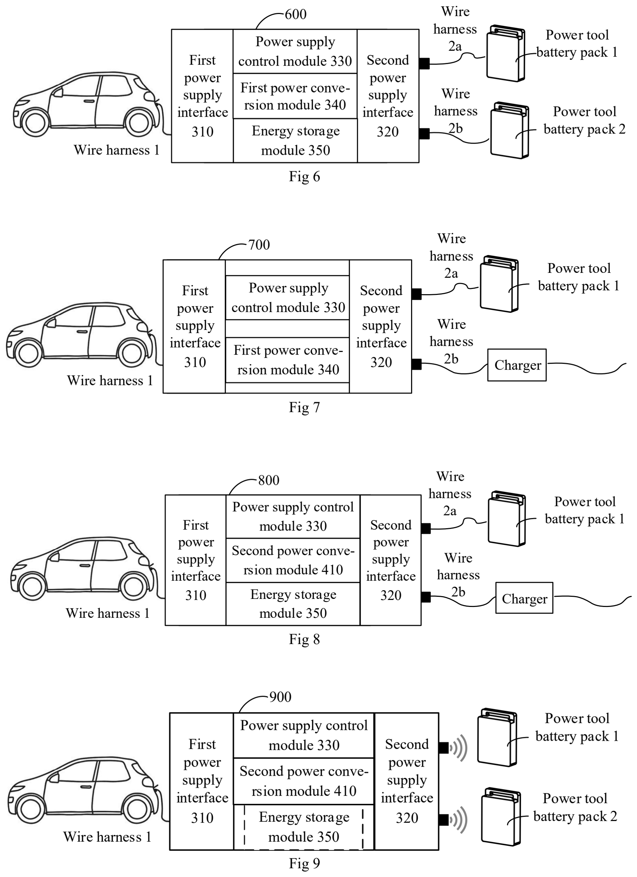

The power supply solution based on the power supply control device according to the embodiments of the disclosure is introduced below with reference to Fig. 6, taking a power supply control device provided with an energy storage module 350 as an example.

Referring to Fig. 6, the power supply control device 600 includes a first power supply interface 310, two second power supply interfaces 320, a power supply control module 330, a first power conversion module 340, and an energy storage module 350, wherein the second power supply interface 320 includes a second power supply interface 1 and a second power supply interface 2. The first power supply interface 310 can be electrically connected to the charging interface of an electric vehicle or electric vehicle charging pile through wire harness 1, the second power supply interface 1 can be electrically connected to the charging interface D1 of power tool battery pack 1 through wire harness 2a, and the second power supply interface 2 can be electrically connected to the charging interface D2 of power tool battery pack 2 through wire harness 2b.

When the power supply control device 600 is idle, or when the power supply control device 600 does not need to supply power to power tool battery packs, the energy storage module 350 can store electric power from the electric vehicle, so that when the power supply control device 600 subsequently needs to supply power to power tool battery packs, the electric power stored in the energy storage module 350 can be used to supply power to the power tool battery packs.

In the process of charging power tool battery packs using the power supply control device 600, the electric power stored in the energy storage module 340 is input to the second power conversion module 410, and the second power conversion module 410 outputs charging current supported by the power tool battery packs. This charging current can be input to power tool battery pack 1 through wire harness 2a and input to power tool battery pack 2 through wire harness 2b.

In the embodiments of the disclosure, regardless of whether the electric vehicle or electric vehicle charging pile can serve as a power source for power tool battery packs, a power supply control device including an energy storage module can be used to supply power to power tool battery packs, thereby improving the flexibility of supplying power to power tool battery packs.

The power supply solution based on the power supply control device according to the embodiments of the disclosure is introduced below with reference to Fig. 7, taking a power supply control device 700 that can provide AC output as an example. It should be noted that the power supply solution of the power supply control device 700 for power tool battery packs is similar to the solutions of other power supply control devices introduced above for supplying power to power tool battery packs. For brevity, details will not be repeated below.

Referring to Fig. 7, the power supply control device 700 includes a first power supply interface 310, a second power supply interface 320, a power supply control module 330, and a first power conversion module 340, and the second power supply interface 320 includes a second power supply interface 1 and a second power supply interface 2. The first power supply interface 310 can be electrically connected to the charging interface of an electric vehicle through wire harness 1, the second power supply interface 1 can be electrically connected to the charging interface D1 of power tool battery pack 1 through wire harness 2a, and the second power supply interface 2 can be connected to a charger through wire harness 2b and provide AC output to serve as a power source for supplying power to other devices that need electric power.

It should be noted that when multiple second power supply interfaces in the power supply control device include AC output ports and DC output ports, two types of power conversion modules can be provided in the power supply control device to provide power conversion for AC power supply interfaces and DC power supply interfaces respectively. In some implementations, the above two types of power conversion modules may include DC/DC conversion modules and DC/AC conversion modules. In other implementations, the above two types of power conversion modules may include AC/DC conversion modules and AC/AC conversion modules.

When the charging interface of the electric vehicle or electric vehicle charging pile is connected to the first power supply interface 310 of the charging control device, the electric power in the electric vehicle or electric vehicle charging pile can be converted into AC power through the power conversion circuit and input to the charger to supply power to other devices.

In the embodiments of the disclosure, while the power supply control device uses the electric power of the electric vehicle or electric vehicle charging pile to charge power tool battery packs, it can also convert the electric power of the electric vehicle or electric vehicle charging pile into AC power for external output to provide electric power for devices other than power tool battery packs.

The power supply solution based on the power supply control device according to the embodiments of the disclosure is introduced below with reference to Fig. 8, taking a power supply control device 800 that can provide AC output as an example. It should be noted that the power supply solution of the power supply control device 800 for power tool battery packs is similar to the solutions of other power supply control devices introduced above for supplying power to power tool battery packs. For brevity, details will not be repeated below.

Referring to Fig. 8, the power supply control device 800 includes a first power supply interface 310, a second power supply interface 320, a power supply control module 330, a second power conversion module 410, and an energy storage module 350, wherein the second power supply interface 320 includes a second power supply interface 1 and a second power supply interface 2, and the second power supply interface 2 can provide AC output, and the second power supply interface 1 can provide DC output. The first power supply interface 310 can be electrically connected to the charging interface of an electric vehicle or electric vehicle charging pile through wire harness 1, the second power supply interface 1 can be electrically connected to the charging interface D1 of power tool battery pack 1 through wire harness 2a, and the second power supply interface 2 can be connected to a charger through wire harness 2b and provide AC output to serve as a power source for supplying power to other devices that need electric power.

When the charging and discharging interface of the electric vehicle or electric vehicle charging pile is connected to the first power supply interface 310 of the charging control device, the electric power in the electric vehicle or electric vehicle charging pile can be output to the first power supply interface 310 of the power supply management device 800 in the form of AC or DC. The first power supply interface 310 can store the obtained electric power in the energy storage unit.

When the second power supply interface 1 and the second power supply interface 2 are respectively connected to power tool battery packs, the electric power stored in the energy storage module 350 can be input to the second power conversion module 410 and undergo power conversion through the second power conversion module 410 to convert the electric power in the energy storage module 350 into AC that can supply power to other devices.

In the embodiments of the disclosure, the electric power from the electric vehicle or electric vehicle charging pile is converted to AC through the power supply control device to provide electric power for other devices, and when the power supply control device outputs AC, it can be independent of real-time connection to the electric vehicle or electric vehicle charging pile, which is conducive to improving the flexibility of power supply.

The power supply solution based on the power supply control device according to the embodiments of the disclosure is introduced below with reference to Fig. 9, taking a power supply control device 900 that supports wireless charging as an example. It should be noted that the functions of various modules contained in the power supply control device 900 and the cooperative relationships between modules have been introduced above. For brevity, details will not be repeated below.

Referring to Fig. 9, the power supply control device 900 includes a first power supply interface 310, a second power supply interface 320, a power supply control module 330, a second power conversion module 410, and an energy storage module 350, and the second power supply interface 320 includes a second power supply interface 1 and a second power supply interface 2. The first power supply interface 310 can be electrically connected to the charging interface of an electric vehicle or electric vehicle charging pile through wire harness 1, and the second power supply interface 1 and the second power supply interface 2 are wireless charging ports that can charge power tool battery pack 1 and power tool battery pack 2 in a wireless charging manner.

When the charging and discharging interface of the electric vehicle or electric vehicle charging pile is connected to the first power supply interface 310 of the charging control device, the electric power in the electric vehicle can be output to the first power supply interface 310 of the power supply management device 900 in the form of AC or DC. The first power supply interface 310 can store the obtained electric power in the energy storage unit.

When the power supply control device 900 needs to supply power to power tool battery packs, the power supply control device 900 can supply power to power tool battery pack 1 through the second power supply interface 1 in a wireless charging manner. The power supply control device 900 can supply power to power tool battery pack 2 through the second power supply interface 2 in a wireless charging manner.

Alternatively, the power supply control device 900 can also supply power to a power tool battery pack through one power supply interface in a wired charging manner, and supply power to a power tool battery pack through another power supply interface in a wireless charging manner.

It should be noted that in the embodiments of the disclosure, the power supply control device 900 may also not include the energy storage module 350. In this case, the electric power in the electric vehicle or electric vehicle charging pile can supply power to power tool battery pack 2 in a wireless charging manner.

In the embodiments of the disclosure, the power supply control device can input the electric power obtained from the electric vehicle or electric vehicle charging pile into the battery pack of the power tool in a wireless charging manner, so as to reduce wire harnesses in the power supply control device and improve the portability of charging power tool battery packs.

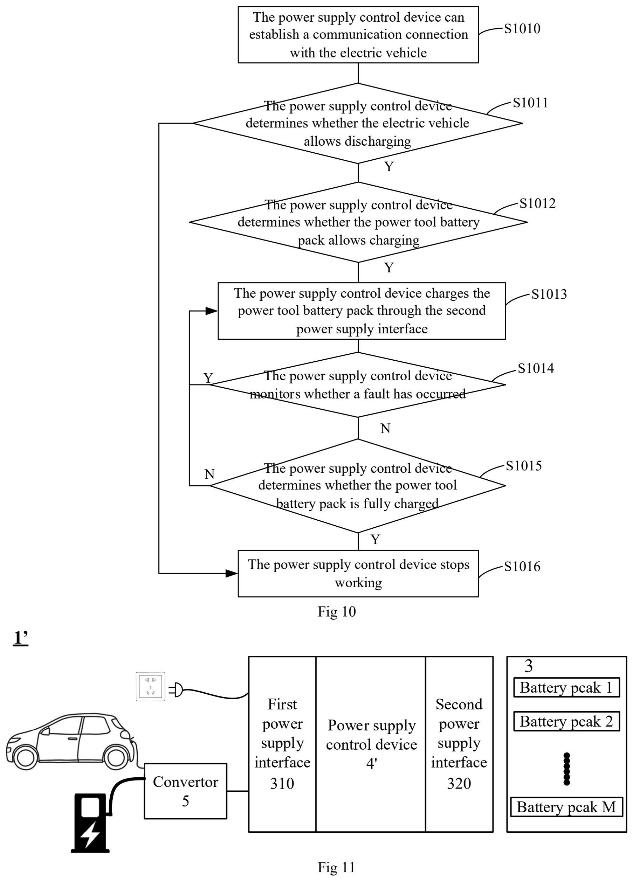

The device embodiments of the disclosure have been described in detail above with reference to Fig. 1 to 9. The method embodiments of the disclosure are described in detail below with reference to Fig. 10. It should be understood that the method embodiments can be used in conjunction with any of the above-mentioned power supply control devices.

Figure 10 is a flowchart of a power supply method according to an embodiment of the disclosure. The power supply method shown in Fig. 10 may include steps S1010 to S1016.

In step S1010, when the first power supply interface of the power supply control device is electrically connected to the electric vehicle or the electric vehicle charging pile, the power supply control device can establish a communication connection with the electric vehicle or the electric vehicle charging pile.

In some implementations, the above-mentioned communication connection may include a handshaking process between the power supply control device and the electric vehicle.

In step S1011, the power supply control device determines whether the electric vehicle allows discharging.

If the electric vehicle allows discharging, step S1012 is executed. If the electric vehicle does not allow discharging, step S1013 is executed.

In some implementations, the power supply control device can determine whether the electric vehicle allows discharging based on the remaining energy of the electric vehicle. When the remaining energy of the electric vehicle is higher than or equal to a first preset battery level, the power supply control device can determine that the electric vehicle can discharge. Conversely, when the remaining energy of the electric vehicle is lower than the first preset battery level, the power supply control device can determine that the electric vehicle cannot discharge.

In other implementations, the power supply control device can determine whether the electric vehicle or the electric vehicle charging pile allows discharging based on the working status of the electric vehicle or the electric vehicle charging pile. When the working status of the electric vehicle or the electric vehicle charging pile is abnormal (for example, short circuit), the power supply control device can determine that the electric vehicle or the electric vehicle charging pile does not allow discharging. Conversely, when the working status of the electric vehicle or the electric vehicle charging pile is normal, the power supply control device can determine that the electric vehicle allows discharging.

In step S1012, the power supply control device determines whether the power tool battery pack allows charging.

If the power tool battery pack allows charging, step S1013 is executed. If the electric vehicle or the electric vehicle charging pile does not allow charging, step S1016 is executed.

In some implementations, the power supply control device can determine whether the power tool battery pack allows discharging based on the energy of the power tool battery pack. When the energy of the power tool battery pack is higher than or equal to a first preset battery level (for example, the power tool battery pack is in a fully charged state), the power supply control device can determine that the power tool battery pack does not allow charging. Conversely, when the energy of the power tool battery pack is lower than the first preset battery level, the power supply control device can determine that the power tool battery pack allows charging.

In other implementations, the power supply control device can determine whether the power tool battery pack allows charging based on the working status of the power tool battery pack. When the working status of the power tool battery pack is abnormal (for example, short circuit), the power supply control device can determine that the power tool battery pack does not allow charging. Conversely, when the working status of the power tool battery pack is normal, the power supply control device can determine that the power tool battery pack allows charging.

After step S1012, the power supply control device communicates with the electric vehicle or the electric vehicle charging pile through the power supply communication module to match power.

In some implementations, after the power supply control module of the power supply control device obtains the charging demand, it generates a request instruction and transmits it to the electric vehicle or electric vehicle charging pile through the power supply communication module. The electric vehicle or electric vehicle charging pile feeds back its rated output power to the power supply communication module of the power supply control device based on the received request instruction. The power supply control module 330 generates a power demand parameter of the power supply control device according to the obtained charging demand. The power supply control module 330 receives the rated output power of the electric vehicle or electric vehicle charging pile transmitted by the power supply communication module and compares it with the power demand parameter of the power supply control device. When the power supply control module determines that the rated output parameter of the electric vehicle or electric vehicle charging pile is not less than the power demand parameter of the power supply control device, the power demand parameter of the power supply control device are sent as a parameter request to the electric vehicle or electric vehicle charging pile to obtain the power demand parameter. Conversely, when the power supply control module determines that the rated output parameter of the electric vehicle or electric vehicle charging pile are less than the power demand parameter of the power supply control device, in order to ensure the output safety of the electric vehicle or electric vehicle charging pile, the power supply control module sends the rated output parameter of the electric vehicle or electric vehicle charging pile as a parameter request to the electric vehicle or electric vehicle charging pile to obtain electric power.

In step S1013, the power supply control device charges the power tool battery pack through the second power supply interface. For example, converting the electric power input from the electric vehicle or electric vehicle charging pile to charge the power tool battery pack through the first power conversion module, or converting the electric power of the energy storage module to charge the power tool battery pack through the second power conversion module, or converting the electric power of the electric vehicle or electric vehicle charging pile to charge the energy storage module and/or power tool battery pack through the third power conversion module.

In step S1014, the power supply control device monitors the status of the power tool battery pack and/or the status of the electric vehicle or electric vehicle charging pile to determine whether a fault has occurred.

If the power supply control device determines that no fault has occurred, step S1015 is executed; if the power supply control device determines that a fault has occurred, step S1016 is executed.

In step S1015, the power supply control device determines whether the power tool battery pack is fully charged.

If the energy of the power tool battery pack is higher than a second preset battery level (for example, in a fully charged state), step S1016 is executed; if the energy of the power tool battery pack is lower than the second preset battery level, steps S1013 and S1014 are executed.

In step S1016, the power supply control device stops working.

In addition to the power anxiety problem of power tools mentioned earlier, there is usually also the problem of charging convenience for power tools. That is, unlike fuel-powered tools that can refuel anytime and anywhere, the charging of power tool energy systems is largely affected by the location and there are inconvenient situations.

Taking garden tools as an example, in the commonly used scenario where 2-3 workers form a team, the team usually carries fully charged battery pack systems and multiple power tools for work. For garden companies or teams, on one hand, they need to charge the battery pack systems or energy storage devices in advance at night, and also need to charge the car battery with sufficient electric power. Therefore, in environments where mains power is available, in order to avoid usage conflicts with electric vehicle charging piles, using mains power to directly charge power tool battery packs is still a convenient way.

For garden companies, multiple teams are usually set up and paired with multiple sets of power tools and battery pack products. Therefore, multiple sets of equipment need to be charged at night. Compared to setting up multiple electric vehicle charging piles, directly accessing indoor mains power interfaces to obtain mains power is more convenient.

In addition, existing power supply control equipment used for charging power tool battery packs usually also have mains power interfaces for accessing mains power.

Therefore, in addition to the problem of power supply, the inconvenience of power replenishment locations also aggravates people's power anxiety about power tools to a certain extent.

The embodiments of the disclosure also provide another different problem-solving approach. The problem-solving approach is to provide a power supply system so that power tool battery packs can not only access mains power interfaces to obtain grid power, but also obtain electric power from electric vehicles or electric vehicles through power supply control devices. In this way, power tool users do not need to worry about insufficient power supply due to not being able to find suitable power sources (for example, AC mains power) outdoors, nor do they need to worry about the problem of being unable to simply match common mains power scenarios due to power supply interfaces only matching electric vehicles or electric vehicle charging piles. In addition, this solution can also effectively solve the problem of increased usage costs caused by users being unable to use existing AC plug power supply control devices and needing to purchase new power supply control equipment. This solution not only solves the power supply problem, but also helps users upgrade their power supply systems for power tools at relatively low cost, helping to truly achieve comprehensive transformation from fuel-powered tools to power tools. For ease of understanding, the power supply system 1' used in the embodiments of the disclosure is introduced below with reference to Fig. 11. Fig. 11 is a schematic diagram of the power supply system 1' used in the embodiments of the disclosure. The power supply system shown in Fig. 11 includes a battery pack system 3, a power supply control device 4', and a convertor 5.

The power supply control device 4' is connected to an electric vehicle or electric vehicle charging pile through the convertor 5, or the power supply control device 4' is directly connected to mains power through an AC socket to receive electric power and provide the received electric power to the battery pack system. The battery pack system 3 is consistent with the previous embodiments. For brevity, it will not be described again here.

To facilitate understanding of the power supply system according to the embodiments of the disclosure, the power supply system according to the embodiments of the disclosure is introduced below with reference to Fig. 11.

The power supply system 1' shown in Fig. 11 includes a power supply control device 4' and a convertor 5, wherein the power supply control device 4' includes a first power supply interface 210 and a second power supply interface 220.

The first power supply interface 210 is detachably connected to a mains power interface to obtain electric power from mains power. The supply voltage and power of the mains power interface are set according to the standards of each region.

The second power supply interface 220 is for the first power supply interface 210 to detachably connect to provide the mains electric power obtained by the first power supply interface 210 to the power tool battery pack.

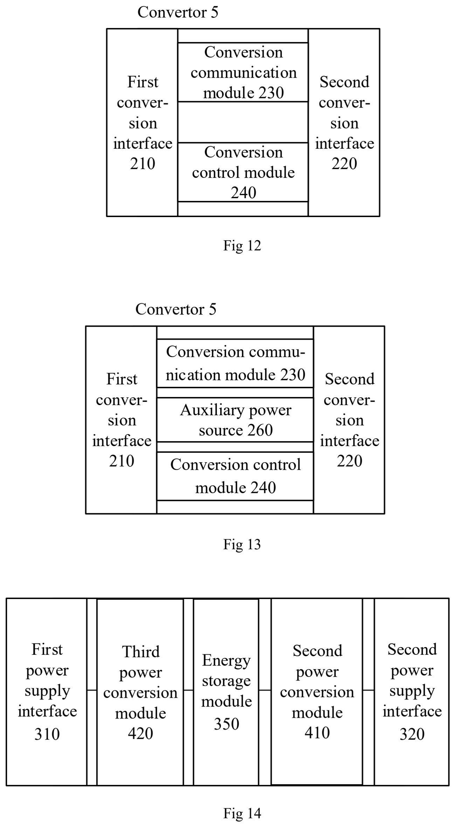

The convertor 5 shown in Fig. 12 includes: a first conversion interface 210 and a second conversion interface 220.

The first conversion interface 210 is detachably connected to a charging and discharging interface of an electric vehicle or an electric vehicle charging pile to obtain electric power; the second conversion interface 220 is electrically connected to the first conversion interface 210 to form an electrical path to output the electric power from the electric vehicle or the electric vehicle charging pile by the second conversion interface 220. The second conversion interface 220 is the same as the mains power interface, for the first power supply interface 310 to detachably connect to, so that the power supply control device 4' obtains electric power from the electric vehicle or the electric vehicle charging pile from the first power supply interface 310.

The charging and discharging interface of the electric vehicle or the electric vehicle charging pile has been described in the previous embodiments and will not be repeated here.

In the embodiments of the disclosure, the first power supply interface of the power supply control device 4' is connected to mains power to obtain electric power from mains power, and the first power supply interface can also be connected to the charging and discharging interface of an electric vehicle or an electric vehicle charging pile through a convertor to obtain electric power from the electric vehicle battery or charging pile, to supply the obtained electric power to the power tool battery pack, thereby supplying power to the power tool battery pack. In addition to the advantages of using electric vehicles or electric vehicle charging piles as energy sources to charge power tool battery packs mentioned above, enabling power tool users to maintain long-term use of power tools not only outdoors or in places without mains power outlets, this embodiment also enables power tool users to conveniently and optionally connect to mains power outlets or charging and discharging interfaces of electric vehicles or electric vehicle charging piles when preparing for the next day's work at night, effectively broadening the power supply methods of the power supply system and power supply control device, and expanding usage scenarios. In addition, it can be understood that for users who already have first-generation power tool power supply systems that only support mains power scenarios, they only need to purchase a convertor separately to match electric vehicles or electric vehicle charging piles to obtain electric power, which can be upgraded at low cost to support connection to electric vehicles or electric vehicle charging piles for power replenishment, effectively enhancing users' willingness and sustainability to use power tools.

In one embodiment, the convertor 5 includes a convertor main body, a conversion input wire harness, and a conversion output wire harness. The conversion input wire harness includes a first end and a second end, the first conversion interface 210 is disposed at the first end, and the second end of the conversion input wire harness is detachably connected to the convertor main body. Similarly, the conversion output wire harness also includes a first end and a second end, the second conversion interface 220 is disposed at the first end, and the second end of the conversion output wire harness is detachably connected to the convertor main body.

In this embodiment, in order to improve the compatibility between the convertor 5 and the electric vehicle or electric vehicle charging pile, and the power supply control device 4', the first conversion interface 210 can adopt the same charging interface standard as the electric vehicle or electric vehicle charging pile. In some implementations, the first conversion interface 210 can be a charging gun plug.

Similar to the power supply control device, both the conversion input wire harness and the conversion output wire harness of the convertor 5 can be detachably connected to the convertor main body, so that when the convertor is not in use, the user can detach the conversion input wire harness and the conversion output wire harness from the convertor main body for storage.

In one embodiment, the convertor 5 includes a conversion communication module; the conversion communication module 230 sends a request instruction representing external power discharge to the electric vehicle or the electric vehicle charging pile following a first power supply communication protocol, so that the convertor 5 obtains input electric power; wherein the first power supply communication protocol is a matching communication protocol of the electric vehicle or the electric vehicle charging pile.

It can be understood that in order to enable the convertor 5 to adapt to the electric vehicle or the electric vehicle charging pile to obtain electric power, it is necessary to communicate with them according to the matching communication protocol of the electric vehicle or the electric vehicle charging pile, and after establishing communication, send a discharge request to obtain electric power from the electric vehicle or the electric vehicle charging pile.

In one embodiment, the power supply control device 4' includes a power supply communication module 380 and a power supply control module 330, and correspondingly, the convertor 5 includes a conversion communication module 230 and a conversion control module 240. The power supply communication module 380 and the power supply control module 330 are electrically connected, and the conversion communication module 230 and the conversion control module 240 are electrically connected. When the convertor 5 is electrically connected to the power supply control device 4' through the second conversion interface, the conversion communication module 230 establishes communication with the power supply communication module 380 to obtain a power demand parameter required for charging of the power supply control device. When the first conversion interface 210 of the convertor 5 is connected to an electric vehicle or an electric vehicle charging pile, the conversion communication module 230 also establishes communication with the electric vehicle or the electric vehicle charging pile to obtain an output parameter of the electric vehicle or the electric vehicle charging pile. The conversion control module 240 determines a matching output parameter for providing to the power supply control device according to the power demand parameter of the power supply control device and the output parameter of the electric vehicle or the electric vehicle charging pile, and controls the conversion communication module 240 to send the matching output parameter to the electric vehicle or the electric vehicle charging pile.

In some scenarios, when the second power supply interface 320 of the power supply control device 4' is connected to the power tool battery pack and/or an internal energy storage power source has a charging demand, the power supply control module 330 obtains the charging demand of the power supply control device 4', and generates a power demand parameter of the power supply control device; the conversion communication module 230 establishes communication with the power supply communication module 380 to obtain the power demand parameter. Correspondingly, the conversion communication module 230 establishes communication with the electric vehicle or the electric vehicle charging pile to obtain an output parameter of the electric vehicle or the electric vehicle charging pile. Further, the conversion communication module 230 sends information to the conversion control module 240 after receiving the information, that is, the conversion communication module 230 sends the received output parameter of the electric vehicle or the electric vehicle charging pile and the power demand parameter of the power supply control device to the conversion control module 240 for use. The conversion control module 240 determines a matching output parameter for providing to the power supply control device based on the received output parameter of the electric vehicle or the electric vehicle charging pile and the power demand parameter of the power supply control device, and controls the conversion communication module 240 to send the matching output parameter to the electric vehicle or the electric vehicle charging pile again, so that the power supply control device obtains the matching output parameter from the electric vehicle or the electric vehicle charging pile.

Wherein, the output parameter of the electric vehicle or the electric vehicle charging pile at least comprise a rated output parameter, a real-time output parameter, a maximum output parameter, etc., which are not specifically limited here.

It can be understood that a communication protocol followed in the power supply control device is often different from a communication protocol followed in the electric vehicle or the electric vehicle, therefore the convertor needs to be compatible with two communication protocols for conversion to realize communication intercommunication within the three in the power supply system. The conversion communication module 230 communicates with the power supply communication module 380 using a first power supply communication protocol followed in the power supply control device, and the conversion communication module 230 or the conversion control module 240 converts data into communication data following a second power supply communication protocol, and then the conversion communication module 230 communicates with the electric vehicle or the electric vehicle charging pile using the second power supply communication protocol. Thereby, the convertor completes conversion and matching of communication data, and realizes information intercommunication among the power supply control device, the convertor and the electric vehicle or the electric vehicle charging pile in the power supply system. In other implementation manners, the first power supply communication protocol and the second power supply communication protocol may also be the same. In this case, the convertor only needs to perform interface matching and communication bridging to realize information intercommunication within the power supply system.

Of course, communicating on a basis of realizing information intercommunication, the electric vehicle or the electric vehicle charging pile will provide electric power to the power supply control device 4' through the convertor 5 according to a power supply matching instruction, that is, the power supply control device 4' can obtain input power matching the power supply matching instruction to output to the power tool battery pack and/or the built-in energy storage power source for power supply.

It should be noted that the power supply communication module 230 and the conversion communication module 380 are often matched and set, and are same types of communication modules, for example, both are Bluetooth, both are 4G, both are WiFi, or both are power line carrier modules, etc. For setting of the communication modules, reference may be made to previous records.

In an embodiment, when the conversion communication module 230 fails to communicate with the power supply communication module 380 and cannot obtain a power demand parameter of the power supply control device, the conversion control module 240 uses the preset demand parameter as the power demand parameter of the power supply control device.

It can be understood that for some power supply control devices, the power supply control devices do not possess the power supply communication module 380, or the power supply control devices do not possess the power supply communication module 380 capable of communicating with the conversion communication module 230, so normal communication cannot be established. In addition, even if the power supply communication module 380 matches the conversion communication module 230, a situation of communication failure may exist. At this time, in order not to affect communication within the power supply system and not to affect power supply to the power supply control device, a demand parameter is pre-stored in the conversion control module 240, and the preset demand parameter is used as the power demand parameter of the power supply control device for comparison with a rated output parameter of the electric vehicle or the electric vehicle charging pile, thereby completing demand matching.

In some scenarios, taking output power as an example, considering that the power supply control device can at least receive output power of mains power, therefore, the preset demand parameter can be set to a maximum power value of mains power, such as 1.8 KW. Of course, the preset demand parameter can also be other parameter values, which can be selected by a user or a manufacturer according to actual situations, and are not specifically limited here.

In an embodiment, in order to satisfy that the power supply control device 4' achieves user-expected output and satisfy working protection of various devices in the power supply system, the rated output parameter of the electric vehicle or the electric vehicle charging pile and the power demand parameter of the power supply control device 4' can be selected as comparison standards. When the conversion control module 240 receives the parameter from the conversion communication module 230, and determines that the power demand parameter of the power supply control device is not greater than the rated output parameter of the electric vehicle or the electric vehicle charging pile, the power demand parameter of the power supply device is determined as the matching output parameter, so that the power supply control device 4' can obtain the power demand parameter from the electric vehicle or the electric vehicle charging pile. Conversely, when the conversion control module 240 determines that the power demand parameter of the power supply control device is greater than the rated output parameter of the electric vehicle or the electric vehicle charging pile, the rated output parameter of the electric vehicle or the electric vehicle charging pile is determined as the matching output parameter so that the power supply control device 4' obtains the rated output parameter of the electric vehicle or the electric vehicle charging pile from the electric vehicle or the electric vehicle charging pile.

In this embodiment, in order to realize input and output power matching between the electric vehicle or the electric vehicle charging pile and the power supply control device, a manner in which the convertor performs communication conversion and parameter matching is adopted, so that the various devices in the power supply system can realize information intercommunication, and can also transmit matching instructions based on communication, thereby enabling the power supply control device to output a reasonable output parameter, which not only meets output demand of the power supply control device as much as possible, but also strongly ensures working safety of the power supply system.

In an embodiment, referring to FIG. 13, the convertor 5 further comprises a power supply circuit, configured to connect an auxiliary power source 260 to provide auxiliary electric power to the conversion control module of the convertor 5. In order to cope with a situation where some power supply control devices are passive, before obtaining electric power from the electric vehicle or the electric vehicle charging pile, neither the convertor 5 nor the power supply control device has power supply, so neither the power supply control module 330 nor the conversion control module 240 can be enabled. Therefore, in order to enable the convertor to achieve a matching effect, the auxiliary power source 260 is provided in the convertor 5 to provide the auxiliary electric power at least to the conversion control module of the convertor.

It can be understood that the auxiliary power source 260 can be built in the convertor 5. Correspondingly, the convertor 5 can also be provided with a charging circuit, with one end connected to the first conversion interface and the other end connected to the auxiliary power source 260, to realize power replenishment for the auxiliary power source 260 through the electric vehicle or the electric vehicle charging pile.

In another implementation manner, the convertor 5 can also be provided with a power source interface connected to the power supply circuit for the power tool battery pack to detachably connect.

It can be understood that the auxiliary power source 260 can also be an external power source, that is, the power tool battery pack. For consistency of the whole power supply system, the user owning the power supply control device is necessarily equipped with a corresponding power tool battery pack, so the user's existing power tool battery pack can be used as the external auxiliary power source of the convertor 5 to provide electric power to the conversion control module 240. Such design avoids the user purchasing other power sources for matching, reducing usage cost for the user to a certain extent.

In an embodiment, referring to FIG. 11 again, the power supply control device further comprises the first power conversion module 340. An input end of the first power conversion module 340 is electrically connected to the first power supply interface 310, and an output end of the first power conversion module 340 is electrically connected to the second power supply interface 320. The power supply control module 330 obtains an input power parameter of the first power supply interface, and controls the first power conversion module to convert the input power parameter into an input parameter required for charging the power tool battery pack according to the input power parameter and the power demand parameter of the power supply control device 4'.

It can be understood that when the power supply control module 340 receives power input, the power supply control module can detect the obtained an input power parameter. Since a matching process causes the power supply control device not always to obtain a requested demand parameter, an output parameter of the power supply control device is different from the input parameter required for charging the power tool battery pack. Therefore, parameter conversion needs to be performed through the first power conversion module 340 to convert into the input parameter required for charging the power tool battery pack. Regarding the first power conversion module 340, reference may be made to the previous embodiments, and for brevity, details will not be repeated here.

In an embodiment, the power supply communication module 380 and the conversion communication module 230 are both wireless communication modules, or both power line carrier modules. In a scenario, the power supply communication module 380 is a wireless communication module, and correspondingly, the conversion communication module 230 in the convertor is also a wireless communication module to match communication. In another feasible implementation manner, the power supply communication module 380 is a power line carrier module, and correspondingly the conversion communication module 230 in the convertor is also a power line carrier module. When using the power line carrier module for communication, a connecting wire harness between the conversion module and the power supply control device needs to use a wire harness supporting power line carrier technology to realize communication in a manner of power line carrier.

In an embodiment, output power of the power supply control device is greater than or equal to 10 W and less than or equal to 20 KW. For a low-voltage small power tool battery pack, the power supply control device can output a minimum of 10 W power for charging, for example, charging a 20 V power tool battery pack with a current of 0.5 A. In this case, a charging speed may be slow. Based on development of current battery technology, platforms of power tool battery packs in the commercial field are gradually becoming high-voltage, and increasingly supporting high-current charging. For example, a 60 V battery pack can support charging at a charging rate of 10 C. In this case, for a 10 AH-60 V battery pack, a charging power of 6 KW is required. If three battery packs are charged simultaneously, the power supply control device needs to provide an output power of 18 KW. Considering that a safe output power of current electric vehicles or electric vehicle charging piles is about 20 KW, in order to ensure working safety of the whole power supply system, the output power of the power supply control device is limited to be not greater than 20 KW.

In an embodiment, in order to avoid unnecessary trouble caused by too low battery level of an electric vehicle battery supplying power to the power supply system, discharge protection needs to be performed based on remaining energy of the electric vehicle. The power supply communication module 380 and the power supply control module 330 are provided in the power supply control device, and the conversion communication module 230 is provided in the convertor. The conversion communication module 230 obtains the remaining energy of the electric vehicle and sends the remaining energy to the power supply communication module 380. The power supply control module 330 learns the remaining energy of the electric vehicle from the power supply communication module 380, compares the remaining energy with a preset battery level, and controls a path between the first power supply interface and the second power supply interface to be in a disconnected state in response to the remaining energy of the electric vehicle being lower than the preset battery level, that is, stops the electric vehicle battery from continuing to supply power to the power tool battery pack.

In another implementation manner, over-discharge protection of the electric vehicle can also be performed in the convertor. The power supply control device is provided with the power supply communication module 380, and the convertor is provided with the conversion communication module 230 and the conversion control module 240. When the power supply control device is electrically connected to the charging and discharging interface of the electric vehicle or the electric vehicle charging pile through the convertor, the conversion communication module 230 obtains the remaining energy of the electric vehicle and sends the remaining energy to the conversion control module 240. The conversion control module 240 controls a path between the first conversion interface and the second conversion interface to be in a disconnected state in response to the remaining energy being lower than a preset battery level, that is, disconnects a power supply electric circuit in the convertor to realize over-discharge protection for the electric vehicle.

In some implementation manners, referring to FIG. 14, the power supply control device further comprises the energy storage module 350 and the second power conversion module 410. An input end of the second power conversion module 410 is electrically connected to an output end of the energy storage module 350, and an output end of the second power conversion module 410 is electrically connected to the second power supply interface 320 to convert output power of the energy storage module 350 into input power required for charging the power tool battery pack.

In some implementation manners, continuing to refer to FIG. 14, the power supply control device further comprises the energy storage module 350 and the third power conversion module 420, wherein an input end of a third power conversion module 420 is electrically connected to the first power supply interface 310, and an output end of the third power conversion module 420 is electrically connected to an input end of the energy storage module 350 to convert input of the power supply control device into electric power of the energy storage module. Regarding the solution where the second power conversion module and/or the third power conversion module are provided in the power supply control device, introduction has been made in the previous text, and for brevity, details will not be repeated here.

In some implementation manners, the power supply control device comprises the power supply control module 330. The power supply control module 330 is configured to select at least one of the energy storage module and the power tool battery pack for charging according to the remaining energy of the energy storage module and the remaining energy of the power tool battery pack; and/or, the power supply control module 330 is further configured to select at least one of the energy storage module and the electric power input from the first power supply interface as a power supply source for charging the power tool battery pack according to the remaining energy of the energy storage module. Regarding charging priority and power supply priority when the energy storage power source is provided in the power supply device, records have been made in the previous text, and details will not be repeated here.

In some implementation manners, the power supply control device comprises the second power supply interface, and a plurality of the second power supply interfaces are configured to electrically connect to a plurality of power tool battery packs.

In some implementation manners, the plurality of the second power supply interfaces are configured to supply power to the plurality of power tool battery packs in a manner of simultaneous power supply or time-division power supply.

In some implementation manners, part or all of the plurality of the second power supply interfaces are provided with wireless charging modules to wirelessly charge the power tool battery packs connected to the plurality of the second power supply interfaces, and/or, part or all of the plurality of the second power supply interfaces are provided with wired charging modules to charge the power tool battery packs connected to the plurality of the second power supply interfaces in a manner of wired electrical connection.

In some implementation manners, the plurality of the second power supply interfaces comprise AC power supply interfaces and/or DC power supply interfaces.

In some implementation manners, the power supply control device comprises an IoT module, and the IoT module is configured to communicate with an external wireless communication device to respond to control of the external wireless communication device. Regarding the setting of the second power supply interface, the charging manner of the second power supply interface, the type of the second power supply interface, and the IoT module, reference may be made to records in the previous embodiments, and details will not be repeated here.

In some embodiments, the input end of the energy storage module 350 and the first power supply interface 310 are both bidirectional interfaces, the third power conversion module 420 is a bidirectional conversion module, and when the energy storage module 350 is electrically connected to the electric vehicle or the electric vehicle charging pile through the first power supply interface 310, the energy storage module 350 can also supply power output of the energy storage module to the electric vehicle or the electric vehicle charging pile after conversion through the third power conversion module 420.

Based on the same reason as above, the electric power of the energy storage module 350 can be reversely converted through the third power conversion module 420, and pass through the first power supply interface 310 to be provided to the electric vehicle or a power grid system.

In an embodiment, output power of the convertor is greater than or equal to 10 W and less than or equal to 20 KW. Similar to the power supply control device, and needing to match input of the electric vehicle or the electric vehicle charging pile and match output of the power supply control device, the output power of the convertor is greater than or equal to 10 W and less than or equal to 20 KW. This satisfies power supply demands of various scenarios and ensures working safety of the whole power supply system.

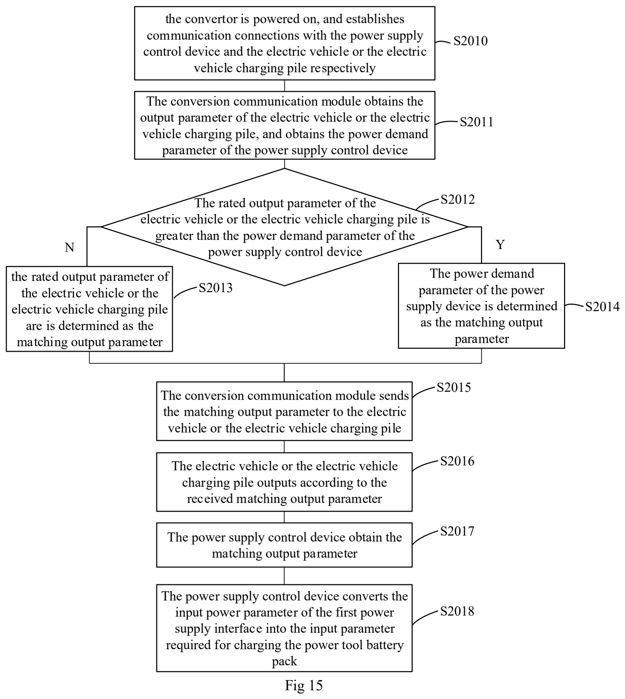

FIG. 15 is a flowchart of a power supply matching method for the power supply system according to an embodiment of the disclosure. The matching method for the power supply system shown in FIG. 15 may comprise step S2010 to step S2018.

In step S2010, the convertor is powered on, and establishes communication connections with the power supply control device and the electric vehicle or the electric vehicle charging pile respectively through the conversion communication module. In some implementation manners, the communication connections may comprise a handshaking process between the convertor and the power supply control device, and a handshaking process between the convertor and the electric vehicle or the electric vehicle charging pile.

It can be understood that the conversion communication module communicates with the electric vehicle or the electric vehicle charging pile according to the first power supply communication protocol, and communicates with the power supply control device according to the second power supply communication protocol, wherein the first power supply communication protocol is different from the second power supply communication protocol.

In some implementation manners, after the convertor establishes communication with the electric vehicle through the conversion communication module, the remaining energy of the electric vehicle can be obtained. The convertor or the power supply control device can determine whether the electric vehicle allows discharging based on the remaining energy of the electric vehicle. When the remaining energy of the electric vehicle is higher than or equal to a first preset battery level, the convertor or the power supply control device can determine that the electric vehicle can discharge. Conversely, when the remaining energy of the electric vehicle is lower than the first preset battery level, the convertor or the power supply control device can determine that the electric vehicle cannot discharge.

In other implementation manners, the convertor or the power supply control device can determine whether the electric vehicle or the electric vehicle charging pile allows discharging based on a working status of the electric vehicle or the electric vehicle charging pile. When the working status of the electric vehicle or the electric vehicle charging pile is abnormal (e.g., short circuit), the convertor or the power supply control device can determine that the electric vehicle or the electric vehicle charging pile does not allow discharging. Conversely, when the working status of the electric vehicle or the electric vehicle charging pile is normal, the convertor or the power supply control device can determine that the electric vehicle allows discharging.

When the electric vehicle or the electric vehicle charging pile allows discharging, power matching is further performed.

In step S2011, the conversion communication module obtains the output parameter of the electric vehicle or the electric vehicle charging pile, and obtains the power demand parameter of the power supply control device.

It can be understood that the power supply control device generates the power demand parameter of the power supply control device based on the charging demand in advance, and sends the power demand parameter through the power supply communication module of the power supply control device, so that the conversion communication module obtains the power demand parameter of the power supply control device.

In some scenarios, when the conversion communication module fails to communicate with the power supply communication module and cannot obtain the power demand parameter of the power supply control device, the conversion control module uses the preset demand parameter as the power demand parameter of the power supply control device.

In step S2012, the conversion control module of the convertor compares whether the rated output parameter of the electric vehicle or the electric vehicle charging pile is greater than the power demand parameter of the power supply control device. If yes, step S2014 is executed; if no, step S2013 is executed.

In step S2013, in response to the rated output parameter of the electric vehicle or the electric vehicle charging pile not being greater than the power demand parameter of the power supply control device, the rated output parameter of the electric vehicle or the electric vehicle charging pile is determined as the matching output parameter.

In step S2014, in response to the rated output parameter of the electric vehicle or the electric vehicle charging pile being greater than the power demand parameter of the power supply control device, the power demand parameter of the power supply device is determined as the matching output parameter.

In step S2015, the conversion communication module sends the matching output parameter to the electric vehicle or the electric vehicle charging pile to realize power matching.

In step S2016, the electric vehicle or the electric vehicle charging pile outputs a parameter according to the received matching output parameter.

In step S2017, the power supply control device can obtain the output parameter matching the matching output parameter through the convertor.

In step S2018, the power supply control device converts the input power parameter of the first power supply interface into the input parameter required for charging the power tool battery pack.

It can be understood that after obtaining the output parameter matching the matching output parameter, the power supply control device further needs to convert the output parameter and demand required by the power tool. For example, after the power supply control device obtains output parameter of 200 V, 7.2 KW, based on charging demand of the power tool battery packs connected to each second power supply interface, and/or charging demand of the energy storage module, if two power tool battery packs in the same state need to be charged, the output parameter obtained by the power supply control device can be converted into two paths to charge the power tool battery packs with 60 V-3.6 KW respectively.

The embodiments of the disclosure further provide a convertor. The convertor comprises: a first conversion interface, wherein the first conversion interface is electrically connected to a charging and discharging interface of an electric vehicle or an electric vehicle charging pile to obtain electric power; a second conversion interface, wherein the first conversion interface is electrically connected to the second conversion interface to output the electric power of the electric vehicle or the electric vehicle charging pile from the second conversion interface; the second conversion interface is further electrically connected to a first power supply interface of a power supply control device, so that the power supply control device obtains the electric power of the electric vehicle or the electric vehicle charging pile from the first power supply interface; wherein the power supply control device is configured to charge a power tool battery pack.

In an implementation manner, the convertor further comprises a convertor main body, a conversion input wire harness and a conversion output wire harness; the conversion input wire harness comprises a first end and a second end, the first power supply interface is disposed at the first end, and the second end is detachably connected to the convertor main body; similarly, the conversion output wire harness comprises a first end and a second end, the second power supply interface is disposed at the first end, and the second end is detachably connected to the convertor main body.

In an implementation manner, the convertor further comprises a conversion control module and a conversion communication module, and the power supply control device comprises a power supply communication module; the conversion control module controls the conversion communication module to establish communication with the power supply communication module to obtain a power demand parameter required for charging of the power supply control device; the conversion control module controls the conversion communication module to establish communication with the electric vehicle or the electric vehicle charging pile to obtain an output parameter of the electric vehicle or the electric vehicle charging pile; the conversion control module determines a matching output parameter for providing to the power supply control device according to the power demand parameter of the power supply control device and the output parameter of the electric vehicle or the electric vehicle charging pile, and controls the conversion communication module to send the matching output parameter to the electric vehicle or the electric vehicle charging pile.

In an implementation manner, when the conversion communication module fails to communicate with the power supply communication module and cannot obtain the power demand parameter of the power supply control device, the conversion control module uses a preset demand parameter as the power demand parameter of the power supply control device.

In an implementation manner, the conversion communication module and the power supply communication module communicate following a second power supply communication protocol; a first power supply communication protocol is different from the second power supply communication protocol.

In an implementation manner, the conversion control module determines the power demand parameter of the power supply device as the matching output parameter when determining that the power demand parameter of the power supply control device is not greater than a rated output parameter of the electric vehicle or the electric vehicle charging pile; the conversion control module determines the rated output parameter of the electric vehicle or the electric vehicle charging pile as the matching output parameter when determining that the power demand parameter of the power supply control device is greater than the rated output parameter of the electric vehicle or the electric vehicle charging pile.

In an implementation manner, the conversion communication module is a wireless communication module or a power line carrier module.

In an implementation manner, the convertor further comprises a power supply circuit, wherein the power supply circuit is connected to an auxiliary power source to provide auxiliary electric power to the conversion control module of the convertor.

In an implementation manner, the auxiliary power source is disposed inside the convertor.

In another implementation manner, the convertor is provided with an auxiliary power source interface, connected to the power supply circuit, for the power tool battery pack to detachably connect.

In an implementation manner, output power of the convertor is greater than or equal to 10 W and less than or equal to 20 KW. Regarding the solution of the convertor, reference may be made to relevant records in the previous embodiments, and details will not be repeated here.

It should be understood that in the embodiments of the disclosure, "B corresponding to A" indicates that B is associated with A, and B can be determined according to A. However, it should also be understood that determining B according to A does not mean determining B only according to A, and B can also be determined according to A and/or other information.

It should be understood that the term "electrical connection" herein may be understood as a form of electrical connection between different components in a circuit structure through physical lines capable of transmitting electrical signals, such as PCB copper foils or wires.

The term "and/or" herein is merely an association relationship describing associated objects, indicating that three relationships may exist. For example, A and/or B may indicate three cases: A exists alone, A and B exist simultaneously, and B exists alone. In addition, the character "/" herein generally indicates that front and rear associated objects are in an "or" relationship.

It should be understood that in various embodiments of the disclosure, sizes of sequence numbers of the above processes do not mean an order of execution, and the execution order of each process should be determined by its function and internal logic, and should not constitute any limitation on the implementation process of the embodiments of the disclosure.

In the several embodiments provided in the disclosure, it should be understood that the disclosed system, device and method may be implemented in other manners. For example, the device embodiments described above are merely schematic. For example, the division of the units is merely a logical function division, and there may be other division manners in actual implementation. For example, a plurality of units or components may be combined or integrated into another system, or some features may be ignored or not executed. Another point is that the displayed or discussed mutual coupling or direct coupling or communication electrical connection may be indirect coupling or communication electrical connection through some interfaces, devices or units, and may be in electrical, mechanical or other forms.

The units described as separate components may or may not be physically separated, and the components displayed as units may or may not be physical units, that is, may be located in one place, or may be distributed on a plurality of network units. Part or all of the units may be selected according to actual needs to achieve the objectives of the solutions of the present embodiments.

In addition, each functional unit in each embodiment of the disclosure may be integrated into one processing unit, or each unit may exist physically alone, or two or more units may be integrated into one unit.

In the above embodiments, implementation may be achieved completely or partially through software, hardware, firmware or any combination thereof. When implemented using software, it may be implemented completely or partially in the form of a computer program product. The computer program product comprises one or more computer instructions. When the computer program instructions are loaded and executed on a computer, the processes or functions according to the embodiments of the disclosure are generated completely or partially. The computer may be a general-purpose computer, a special-purpose computer, a computer network, or other programmable devices. The computer instructions may be stored in a computer-readable storage medium, or transmitted from one computer-readable storage medium to another computer-readable storage medium. For example, the computer instructions may be transmitted from a website site, computer, server or data center to another website site, computer, server or data center through wired (e.g., coaxial cable, optical fiber, digital subscriber line (DSL)) or wireless (e.g., infrared, wireless, microwave, etc.) manners. The computer-readable storage medium may be any available medium that can be read by a computer or a data storage device such as a server or data center integrating one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

The above are merely specific implementation manners of the disclosure, but the protection scope of the disclosure is not limited thereto. Any variation or replacement readily figured out by a person skilled in the art within the technical scope disclosed in the disclosure shall fall within the protection scope of the disclosure. Therefore, the protection scope of the disclosure shall be subject to the protection scope of the claims.

## Claims

1. A power supply control device, comprising: a first power supply interface, a second power supply interface, a power supply control module, and a first power conversion module;
the first power supply interface, wherein the first power supply interface is configured to electrically connect to a charging and discharging interface of an electric vehicle or an electric vehicle charging pile to obtain electric power from the electric vehicle;
the second power supply interface, wherein the second power supply interface is electrically connected to the first power supply interface, and the second power supply interface is further configured to electrically connect to a power tool battery pack to supply the electric power from the electric vehicle or the electric vehicle charging pile obtained by the first power supply interface to the power tool battery pack;
the power supply control module, wherein the power supply control module is electrically connected to the first power supply interface and the second power supply interface, and controls a path between the first power supply interface and the second power supply interface to be in a conductive state or a disconnected state; and
the first power conversion module, wherein an input end of the first power conversion module is electrically connected to the first power supply interface, and an output end of the first power conversion module is electrically connected to the second power supply interface, a control end of the first power conversion module is connected to the power supply control module, when the power supply control module controls the path between the first power supply interface and the second power supply interface to be in the conductive state, the first power conversion module converts output power of the electric vehicle into input power required for charging the power tool battery pack.

2. The power supply control device according to claim 1, wherein when the first power supply interface is electrically connected to the charging and discharging interface of the electric vehicle, the power supply control module communicates with the electric vehicle through the first power supply interface to obtain remaining energy of the electric vehicle, and in response to the remaining energy being lower than a preset battery level, controls the path between the first power supply interface and the second power supply interface to be in the disconnected state.

3. The power supply control device according to claim **1,** wherein the power supply control device further comprises: an energy storage module, wherein an input end of the energy storage module is electrically connected to the first power supply interface, and an output end of the energy storage module is electrically connected to the second power supply interface to store the electric power from the electric vehicle or the electric vehicle charging pile and supply the stored electric power to the power tool battery pack.

5. The power supply control device according to claim 3, wherein the power supply control device further comprises a second power conversion module, an input end of the second power conversion module is electrically connected to the output end of the energy storage module, and an output end of the second power conversion module is electrically connected to the second power supply interface to convert output power of the energy storage module into input power required for charging the power tool battery pack.

6. The power supply control device according to claim 1, wherein the power supply control device comprises a plurality of the second power supply interfaces, the plurality of the second power supply interfaces are configured to electrically connect to a plurality of power tool battery packs.

7. The power supply control device according to claim 6, wherein the plurality of the second power supply interfaces are configured to supply power to the plurality of power tool battery packs in a manner of simultaneous power supply or time-division power supply.

8. The power supply control device according to claim 6, wherein part or all of the plurality of the second power supply interfaces supply power to the plurality of power tool battery packs in a manner of wireless power supply, and/or part or all of the plurality of the second power supply interfaces supply power to the plurality of power tool battery packs in a manner of wired power supply.

9. The power supply control device according to any one of claims 6-8, wherein the plurality of the second power supply interfaces comprise an AC power supply interface and/or a DC power supply interface.

10. The power supply control device according to any one of claims 1-9, wherein the power supply control device comprises an IoT module, the IoT module is configured to communicate with an external wireless communication device to respond to control of the external wireless communication device.

11. The power supply control device according to any one of claims 1-8, wherein
the power supply control device comprises a first wire harness, a first end of the first wire harness is configured to detachably connect to the first power supply interface, and a second end of the first wire harness is configured to detachably connect to the charging and discharging interface of the electric vehicle;
wherein the second end of the first wire harness is a standard charging gun interface;
the power supply control device further comprises a second wire harness, a first end of the second wire harness is configured to detachably connect to the second power supply interface, and a second end of the second wire harness is configured to detachably connect to the power tool battery pack.

12. The power supply control device according to claim 1, wherein
the power supply control device further comprises a power supply communication module, the power supply communication module is configured to exchange information with a communication unit of the electric vehicle or the electric vehicle charging pile through a first power supply communication protocol to at least transmit an output parameter of the electric vehicle or the electric vehicle charging pile and a power demand parameter of the power supply control device.

13. The power supply control device according to claim 12, wherein
the power supply control module sends a power supply request to the electric vehicle or the electric vehicle charging pile with the power demand parameter of the power supply device when the power supply control module determines that the power demand parameter of the power supply control device is not greater than a rated output parameter of the electric vehicle or the electric vehicle charging pile; and
the conversion control module sends a power supply request to the electric vehicle or the electric vehicle charging pile with the rated output parameter of the electric vehicle or the electric vehicle charging pile when the conversion control module determines that the power demand parameter of the power supply control device is greater than the rated output parameter of the electric vehicle or the electric vehicle charging pile.

14. The power supply control device according to claim 12, wherein the power supply communication module is a wireless communication module or a power line carrier module.

15. The power supply control device according to claim 3, wherein a third power conversion module is disposed between the first power supply interface and the input end of the energy storage module;
the input end of the energy storage module and the first power supply interface are both bidirectional interfaces, the third power conversion module is a bidirectional conversion module, when the energy storage module is electrically connected to the electric vehicle or the electric vehicle charging pile through the first power supply interface, the energy storage module can also supply power output of the energy storage module to the electric vehicle or the electric vehicle charging pile after conversion through the third power conversion module.

16. The power supply control device according to claim 1, wherein
the second power supply interface of the power supply control device can also be configured to connect to expansion charging equipment, and the first power conversion module can also be configured to convert the output power of the electric vehicle into input power required for charging the expansion charging equipment.

17. A power supply system, comprising a power supply control device and a convertor; the power supply control device comprises:
a first power supply interface, detachably connected to a mains power interface to obtain electric power;
and a second power supply interface, detachably connected to a power tool battery pack, to supply the electric power obtained by the first power supply interface to the power tool battery pack;
the convertor comprises:
a first conversion interface, detachably connected to a charging and discharging interface of an electric vehicle or an electric vehicle charging pile to obtain electric power;
a second conversion interface, connected to the first conversion interface to output the electric power of the electric vehicle or the electric vehicle charging pile from the second conversion interface; and
the second conversion interface is the same as the mains power interface, for the first power supply interface to detachably connect to, configured to allow that the power supply control device to obtain the electric power from the electric vehicle or the electric vehicle charging pile by the first power supply interface.

18. The power supply system according to claim 17, wherein
the convertor further comprises a convertor main body, a conversion input wire harness and a conversion output wire harness;
the conversion input wire harness comprises a first end and a second end, the first power supply interface is disposed at the first end, the second end is detachably connected to the convertor main body; and
the conversion output wire harness comprises a first end and a second end, the second power supply interface is disposed at the first end, the second end is detachably connected to the convertor main body.

19. The power supply system according to claim 17, wherein
the convertor comprises a conversion communication module;
the conversion communication module sends a request instruction representing external power discharge to the electric vehicle or the electric vehicle charging pile following a first power supply communication protocol, so that the convertor obtains input power;
wherein the first power supply communication protocol is a matching communication protocol of the electric vehicle or the electric vehicle charging pile.

20. The power supply system according to claim 17, wherein
the convertor further comprises a conversion control module and a conversion communication module, the power supply control device comprises a power supply communication module;
the conversion control module controls the conversion communication module to establish communication with the power supply communication module to obtain a power demand parameter required for charging of the power supply control device;
the conversion control module controls the conversion communication module to establish communication with the electric vehicle or the electric vehicle charging pile to obtain an output parameter of the electric vehicle or the electric vehicle charging pile;
the conversion control module determines a matching output parameter for providing to the power supply control device according to the power demand parameter of the power supply control device and the output parameter of the electric vehicle or the electric vehicle charging pile, and controls the conversion communication module to send the matching output parameter to the electric vehicle or the electric vehicle charging pile.

21. The power supply system according to claim 20, wherein
when the conversion communication module fails to communicate with the power supply communication module and cannot obtain the power demand parameter of the power supply control device, the conversion control module treats the preset demand parameter as the power demand parameter of the power supply control device.

22. The power supply system according to claim 20, wherein
the conversion control module determines the power demand parameter of the power supply device as the matching output parameter when the conversion control module determines that the power demand parameter of the power supply control device is not greater than a rated output parameter of the electric vehicle or the electric vehicle charging pile; and
the conversion control module determines the rated output parameter of the electric vehicle or the electric vehicle charging pile as the matching output parameter when the conversion control module determines that the power demand parameter of the power supply control device is greater than the rated output parameter of the electric vehicle or the electric vehicle charging pile.

23. The power supply system according to claim 17, wherein
the conversion communication module and the power supply communication module communicate following a second power supply communication protocol; and
the first power supply communication protocol is different from the second power supply communication protocol.

24. The power supply system according to claim 20, wherein
the power supply control device further comprises:
a first power conversion module, an input end of the first power conversion module is electrically connected to the first power supply interface, and an output end of the first power conversion module is electrically connected to the second power supply interface;
a power supply control module, which is configured to obtain an input power parameter of the first power supply interface, and control the first power conversion module to convert the input power parameter into an input parameter required for charging the power tool battery pack according to the input power parameter and the power demand parameter of the power supply control device.

25. The power supply system according to any one of claims 19-24, wherein the power supply communication module and the conversion communication module are both wireless communication modules or power line carrier modules.

26. The power supply system according to claim 1, wherein
output power of the power supply control device is greater than or equal to 10 W and less than or equal to 22 KW.

27. The power supply system according to claim 19, wherein
the convertor further comprises a conversion control module;
the conversion communication module obtains remaining energy of the electric vehicle and sends it to the conversion control module; and
the conversion control module controls a path between the first conversion interface and the second conversion interface to be in a disconnected state in response to the remaining energy being lower than a preset battery level.

28. The power supply system according to claim 17, wherein the power supply control device further comprises:
an energy storage module;
a second power conversion module, an input end of the second power conversion module is electrically connected to an output end of the energy storage module, and an output end of the second power conversion module is electrically connected to the second power supply interface to convert output power of the energy storage module into input power required for charging the power tool battery pack.

29. The power supply system according to claim 17, wherein the power supply control device further comprises:
an energy storage module;
a third power conversion module, an input end of the third power conversion module is electrically connected to the first power supply interface, and an output end of the third power conversion module is electrically connected to an input end of the energy storage module to convert input of the power supply control device into power of the energy storage module.

30. The power supply system according to claim 28 or 29, wherein
the power supply control device comprises a power supply control module, the power supply control module is configured to: select at least one of the energy storage module and the power tool battery pack for charging according to remaining energy of the energy storage module and remaining energy of the power tool battery pack; and/or,
the power supply control module is further configured to select at least one of the energy storage module and power input from the first power supply interface as a power source for charging the power tool battery pack according to the remaining energy of the energy storage module.

31. The power supply system according to claim 29, wherein
the input end of the energy storage module and the first power supply interface are both bidirectional interfaces, the third power conversion module is a bidirectional conversion module, when the energy storage module is electrically connected to the electric vehicle or the electric vehicle charging pile through the first power supply interface, the energy storage module can also supply power output of the energy storage module to the electric vehicle or the electric vehicle charging pile after conversion through the third power conversion module.

32. The power supply system according to claim 17, wherein the convertor further comprises a power supply circuit, the power supply circuit is connected to an auxiliary power source to provide auxiliary power to a conversion control module of the convertor.

33. The power supply system according to claim 32, wherein the auxiliary power source is disposed inside the convertor.

34. The power supply system according to claim 32, wherein the convertor is provided with an auxiliary power source interface, connected to the power supply circuit, and for the power tool battery pack to detachably connect to.

35. The power supply system according to claim 17, wherein output power of the convertor is greater than or equal to 10 W and less than or equal to 22 KW.

36. A convertor, comprising:
a first conversion interface, the first conversion interface electrically is connects to a charging and discharging interface of an electric vehicle or an electric vehicle charging pile to obtain electric power;
a second conversion interface, the first conversion interface is electrically connected to the second conversion interface to output the electric power of the electric vehicle or the electric vehicle charging pile from the second conversion interface;
the second conversion interface is further configured to connect to a first power supply interface of a power supply control device, so that the power supply control device obtains the electric power of the electric vehicle or the electric vehicle charging pile from the first power supply interface; wherein the power supply control device is configured to charge a power tool battery pack.

37. The convertor according to claim 1, wherein
the convertor further comprises a convertor main body, a conversion input wire harness and a conversion output wire harness;
the conversion input wire harness comprises a first end and a second end, the first power supply interface is disposed at the first end, the second end is detachably connected to the convertor main body;
the conversion output wire harness comprises a first end and a second end, the second power supply interface is disposed at the first end, the second end is detachably connected to the convertor main body.

38. The convertor according to claim 1, wherein
the convertor further comprises a conversion control module and a conversion communication module, the power supply control device comprises a power supply communication module;
the conversion control module controls the conversion communication module to establish communication with the power supply communication module to obtain a power demand parameter required for charging of the power supply control device;
the conversion control module controls the conversion communication module to establish communication with the electric vehicle or the electric vehicle charging pile to obtain an output parameter of the electric vehicle or the electric vehicle charging pile;
the conversion control module determines a matching output parameter for providing to the power supply control device according to the power demand parameter of the power supply control device and the output parameter of the electric vehicle or the electric vehicle charging pile, and controls the conversion communication module to send the matching output parameter to the electric vehicle or the electric vehicle charging pile.

39. The convertor according to claim 38, wherein
when the conversion communication module fails to communicate with the power supply communication module and cannot obtain the power demand parameter of the power supply control device, the conversion control module treats preset demand parameter as the power demand parameter of the power supply control device.

40. The convertor according to claim 38, wherein
the conversion communication module and the power supply communication module communicate following a second power supply communication protocol; and
the first power supply communication protocol is different from the second power supply communication protocol.

41. The convertor according to claim 38, wherein
the conversion control module determines the power demand parameter of the power supply device as the matching output parameter when the conversion control module determines that the power demand parameter of the power supply control device is not greater than a rated output parameter of the electric vehicle or the electric vehicle charging pile;
the conversion control module determines the rated output parameter of the electric vehicle or the electric vehicle charging pile as the matching output parameter when the conversion control module determines that the power demand parameter of the power supply control device is greater than the rated output parameter of the electric vehicle or the electric vehicle charging pile.

42. The convertor according to any one of claims 38-40, wherein
the conversion communication module is a wireless communication module or a power line carrier module.

43. The convertor according to claim 36, wherein the convertor further comprises a power supply circuit, the power supply circuit is connected to an auxiliary power source to provide auxiliary power to a conversion control module of the convertor.

44. The convertor according to claim 43, wherein the auxiliary power source is disposed inside the convertor.

45. The convertor according to claim 43, wherein the convertor is provided with an auxiliary power source interface, connected to the power supply circuit, and for the power tool battery pack to detachably connect to.

46. The convertor according to claim 36, wherein output power of the convertor is greater than or equal to 10 W and less than or equal to 22 KW.
